(19) **Europäisches Patentamt / European Patent Office / Office européen des brevets**

(11) **EP 4 686 181 A1**

(12) # EUROPEAN PATENT APPLICATION
published in accordance with Art. 153(4) EPC

(43) Date of publication:
**28.01.2026 Bulletin 2026/05**

(21) Application number: **24792812.0**

(22) Date of filing: **20.02.2024**

(51) International Patent Classification (IPC):
**H04M 1/02** (2006.01)      **H01Q 1/24** (2006.01)
**G06F 1/16** (2006.01)

(52) Cooperative Patent Classification (CPC):
**G06F 1/16; H01Q 1/24; H04M 1/02**

(86) International application number:
**PCT/KR2024/002192**

(87) International publication number:
**WO 2024/219625 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.04.2023 KR 20230052995
23.05.2023 KR 20230066609**

(71) Applicant: **Samsung Electronics Co., Ltd.
Suwon-si, Gyeonggi-do 16677 (KR)**

(72) Inventors:
• **KIM, Sangheon**
  **Suwon-si, Gyeonggi-do 16677 (KR)**
• **WOO, Kwangtaek**
  **Suwon-si, Gyeonggi-do 16677 (KR)**
• **HAN, Yonggil**
  **Suwon-si, Gyeonggi-do 16677 (KR)**
• **LEE, Jiwoo**
  **Suwon-si, Gyeonggi-do 16677 (KR)**
• **KIM, Minsoo**
  **Suwon-si, Gyeonggi-do 16677 (KR)**

(74) Representative: **HGF
HGF Limited
4th Floor, 1 City Square
Leeds LS1 2AL (GB)**

(54) **ELECTRONIC DEVICE FOR PROVIDING USER INTERFACE RELATED TO ANTENNA, AND METHOD THEREOF**

(57)      A processor of an electronic device, according to one embodiment, while a portion of a flexible display is inserted into a first housing, may identify the execution of an application for transmitting information. The processor, on the basis of identifying an external object adjacent to an antenna on the basis of sensor data, may control an actuator in order to draw out a portion of the flexible display from the first housing. The processor may execute a communication function based on the information, by controlling the antenna spaced apart from the external object, by means of a second housing drawn out from the first housing by means of the actuator.

EP 4 686 181 A1

FIG. 1

Description

[Technical Field]

The following descriptions relate to an electronic device for providing a user interface related to an antenna, and a method thereof.

[Background Art]

An electronic device having a deformable form factor is being developed using a flexible display. For example, the electronic device including a plurality of housings that are foldable may provide a user with a user experience based on a shape of the electronic device using the flexible display disposed across the plurality of housings. For example, based on a shape of the flexible display that is folded or unfolded by an external force of the user, the electronic device may change content displayed on the flexible display. For another example, an electronic device that winds or unfolds a flexible display is being developed.

[Disclosure]

[Technical Solution]

An electronic device according to an embodiment may comprise a first housing. The electronic device may comprise a second housing slidably coupled to the first housing. The electronic device may comprise a flexible display inserted into the first housing or extracted from the first housing by movement of the second housing with respect to the first housing. The electronic device may comprise an antenna disposed adjacent to, among an edge of the second housing facing the first housing or a second edge of the second housing opposed to the first edge, the second housing. The electronic device may comprise an actuator controlling the movement of the second housing with respect to the first housing. The electronic device may comprise one or more sensors. The electronic device may comprise at least one processor including processing circuitry. The electronic device may comprise memory including one or more storage media storing instructions. The instructions, when executed by the at least one processor individually and/or collectively, may cause the electronic device to identify, while a portion of the flexible display is inserted into the first housing, execution of an application to transmit information. The instructions, when executed by the at least one processor individually and/or collectively, may cause the electronic device to, control, based on identifying an external object adjacent to the second edge of the second housing where the antenna is disposed based on data of the one or more sensors, the actuator to extract the portion of the flexible display from the first housing. The instructions, when executed by the at least one processor individually and/or collectively, may cause the electronic device to execute, by controlling the antenna separated from the external object by the second housing extracted from the first housing by the actuator, a communication function based on the information.

A method of an electronic device according to an embodiment may comprise identifying, while a portion of a flexible display of the electronic device is inserted into a first housing of the electronic device, execution of an application to transmit information. The antenna may be disposed adjacent to a second edge among a first edge of a second housing of the electronic device facing the first housing or the second edge of the second housing opposite the first edge. The method may comprise controlling, based on identifying an external object adjacent to the second edge of the second housing where the antenna is disposed based on data of one or more sensors of the electronic device, the actuator to extract the portion of the flexible display from the first housing. The method may comprise executing, by controlling the antenna of the electronic device separated from the external object by the second housing extracted from the first housing by the actuator, a communication function based on the information.

An electronic device according to an embodiment may comprise a first housing and a second housing slidably coupled to the first housing. The electronic device may comprise a flexible display inserted into the first housing or extracted from the first housing by movement of the second housing with respect to the first housing. The electronic device may comprise an antenna disposed adjacent to, among a first edge of the second housing facing the first housing or a second edge of the second housing opposed to the first edge, the second housing. The electronic device may comprise an actuator controlling the movement of the second housing with respect to the first housing. The electronic device may comprise a processor. The processor may be configured to display, based on a function associated with payment, a visual object in a first area of an active area of the flexible display. The processor may be configured to control, based on executing the function, the actuator to extract a portion of the flexible display inserted into the first housing from the first housing. The processor may be configured to move, in the active area extended by the second housing extracted from the first housing by the actuator, the visual object displayed in the first area to a second area of the active area which is overlapped to the antenna and adjacent to the second edge. The processor may be configured to control, in response to completing the execution of the function based on the antenna, the actuator to insert the portion of the flexible display extracted from the first housing into the first housing.

A method of an electronic device according to an embodiment may comprise displaying, based on a function associated with payment, a visual object in a first area of an active area of a flexible display of the electronic device. The flexible display may be inserted into a first housing or extracted from the first housing by movement of a second housing of the electronic device with respect to the first housing of the electronic device. The method may comprise controlling, based on executing the function, an actuator of the electronic device to extract a portion of the flexible display inserted into the first housing from the first housing. The method may comprise moving, in the active area extended by the second housing extracted from the first housing by the actuator, the visual object displayed in the first area to a second area of the active area, which is overlapped to the antenna disposed adjacent to an edge of the second housing. The method may comprise controlling, in response to completing the execution of the function based on the antenna, the actuator to insert the portion of the flexible display extracted from the first housing into the first housing.

An electronic device according to an embodiment may comprise a first housing and a second housing slidably coupled to the first housing. The electronic device may comprise a flexible display inserted into the first housing or extracted from the first housing by movement of the second housing with respect to the first housing. The electronic device may comprise an antenna disposed adjacent to, among a first edge of the second housing facing the first housing or a second edge of the second housing opposed to the first edge, the second housing. The electronic device may comprise an actuator controlling the movement of the second housing with respect to the first housing. The electronic device may comprise one or more sensors. The electronic device may comprise a processor. The processor may be configured to display, while a portion of the flexible display is inserted into the first housing, a visual object in a first area of an active area of the flexible display. The processor may be configured to control, based on identifying an external object between an external electronic device corresponding to the visual object and the second edge based on data of the one or more sensors, the actuator to extract the portion of the flexible display from the first housing. The processor may be configured to move, in the active area extended by the second housing extracted from the first housing by the actuator, the visual object displayed in the first area to a second area of the active area, which is overlapped to the antenna and adjacent to the second edge.

A method of an electronic device according to an embodiment may comprise displaying, while a portion of a flexible display of the electronic device is inserted into a first housing of the electronic device, a visual object in a first area of an active area of the flexible display. The flexible display may be inserted into the first housing or extracted from the first housing by movement of a second housing of the electronic device with respect to the first housing. The method may comprise controlling, based on identifying an external object between an external electronic device corresponding to the visual object and the second housing based on data of one or more sensors of the electronic device, an actuator of the electronic device to extract the portion of the flexible display from the first housing. The method may comprise moving, in the active area extended by the second housing extracted from the first housing by the actuator, the visual object displayed in the first area to a second area of the active area, which is overlapped to the antenna included in the second housing.

An electronic device according to an embodiment may comprise a first housing, a second housing slidably coupled to the first housing, a flexible display inserted into the first housing or extracted from the first housing by movement of the second housing with respect to the first housing, an actuator controlling the movement of the second housing with respect to the first housing, one or more sensors, and a processor. The processor may be configured to display, while a portion of the flexible display is inserted into the first housing, a first screen including a list of functions to be executed for payment of a user. The processor may be configured to control, based on identifying an input indicating execution of a plurality of functions through the list, the actuator to extract the portion of the flexible display from the first housing. The processor may be configured to display, in different portions of an active area of the flexible display extended by the extracted portion, visual objects associated with the execution of the plurality of functions corresponding to the input.

A method of an electronic device according to an embodiment may comprise displaying, while a portion of a flexible display of the electronic device is inserted into a first housing of the electronic device, a first screen including a list of functions to be executed for payment of a user. The method may comprise controlling, based on identifying an input indicating execution of a plurality of functions through the list, an actuator of the electronic device to extract the portion of the flexible display from the first housing. The method may comprise displaying, in different portions of an active area of the flexible display extended by the extracted portion, visual objects associated with the execution of the plurality of functions corresponding to the input.

**[Description of the Drawings]**

FIG. 1 illustrates an example of an electronic device according to an embodiment.
FIGS. 2A to 2B illustrate an embodiment of an electronic device including one or more antennas.

FIG. 3 is a block diagram of an electronic device according to an embodiment.

FIG. 4 illustrates an example of a flowchart of an electronic device according to an embodiment.

FIGS. 5A to 5C illustrate different states of an electronic device displaying a screen based on a position of an antenna.

FIG. 6 illustrates an example of a flowchart of an electronic device according to an embodiment.

FIGS. 7A to 7C illustrate different states of an electronic device controlling an actuator based on an external object.

FIG. 8 illustrates an example of a flowchart of an electronic device according to an embodiment.

FIGS. 9A to 9C illustrate different states of an electronic device processing a wireless signal in UWB.

FIG. 10 illustrates different states of an electronic device performing a communication function based on an NFC antenna.

FIG. 11 illustrates an example of a flowchart of an electronic device according to an embodiment.

FIGS. 12A to 12D illustrate different states of an electronic device adjusting a shape of a flexible display.

FIGS. 13A to 13B are exploded perspective views of an exemplary electronic device.

FIGS. 14A to 14B are cross-sectional views of an electronic device in different states.

**[Mode for Invention]**

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, are only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

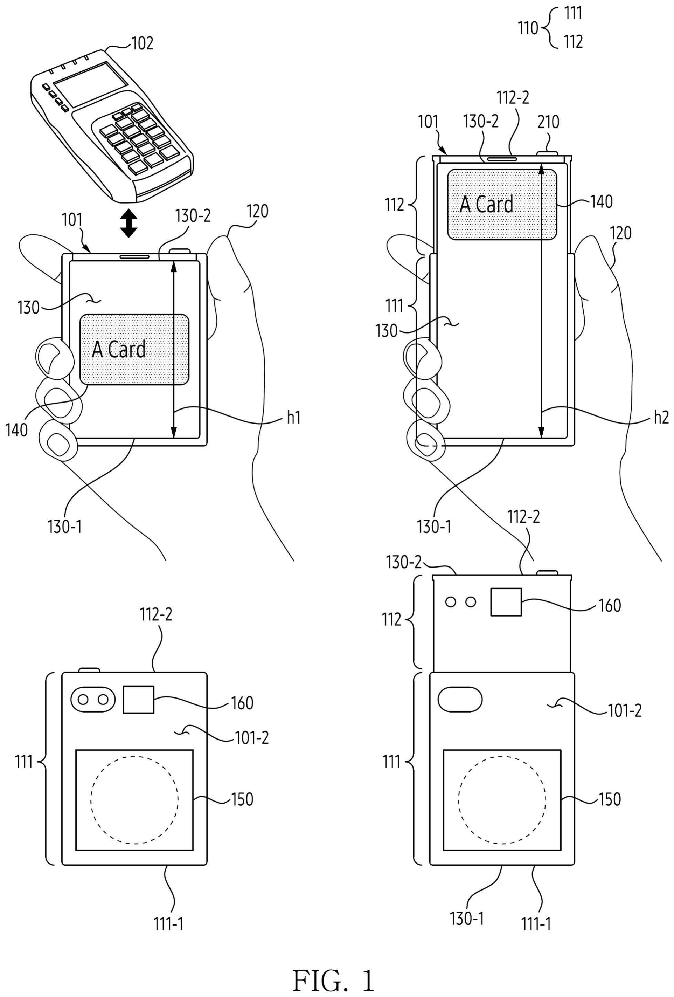

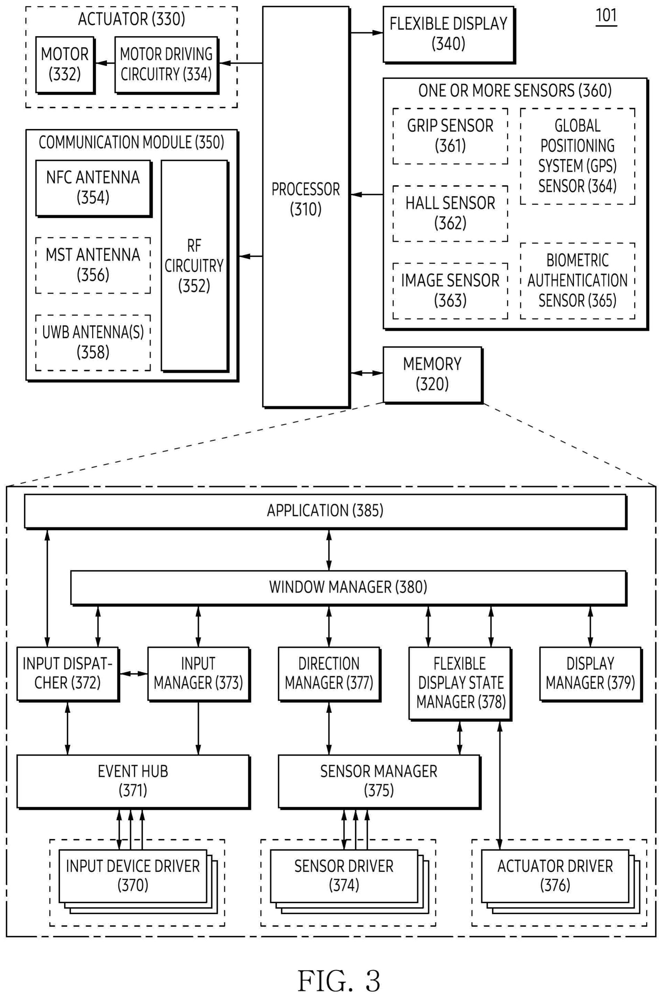

FIG. 1 illustrates an example of an electronic device 101 according to an embodiment. The electronic device 101 may be a terminal owned by a user. A terminal may include, for example, a personal computer (PC) such as a laptop and a desktop, a smartphone, a smartpad, and/or a tablet personal computer (PC). An embodiment is not limited thereto, and the terminal may include a smart accessory such as a smartwatch and/or a head-mounted device (HMD). A housing 110 of the electronic device 101 according to an embodiment may include an internal space in which one or more hardware components (e.g., one or more hardware described below with reference to FIG. 3) included in the electronic device 101 are disposed. The housing 110 may form an outer shape of the electronic device 101.

The electronic device 101 according to an embodiment may have a deformable form factor. Deformation of the electronic device 101 may mean that at least one of dimensions such as a width, a height, and/or a thickness of the electronic device 101 is changed. At least one of the dimensions may be passively changed by an external force applied to the electronic device 101 or may be actively changed by one or more actuators (e.g., an actuator 330 of FIG. 3) included in the electronic device 101.

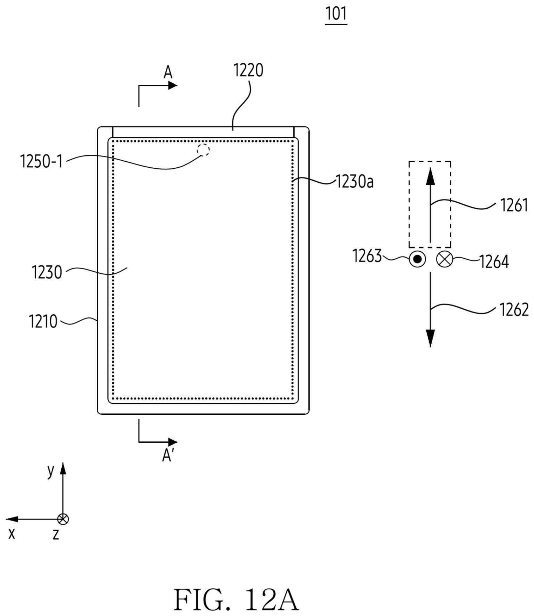

In an embodiment, in order to support deformability of the electronic device 101, the housing 110 may be divided into a first housing 111 and a second housing 112 that are interconnected. The electronic device 101 according to an embodiment may change a shape of a flexible display 130 and/or the electronic device 101 by adjusting a positional relationship between the first housing 111 and the second housing 112 using the actuator (e.g., the actuator 330 of FIG. 3). For example, the second housing 112 may be slidably coupled to the first housing 111. One or more hardware included in the electronic device 101 to adjust the positional relationship will be described with reference to FIGS. 12A to 12D, FIGS. 13A to 13B, and FIGS. 14A to 14B.

Referring to FIG. 1, the flexible display 130 of the electronic device 101 may be disposed across a surface of the first housing 111 and a surface of the second housing 112. The surface of the first housing 111 and the second housing 112 in which the flexible display 130 is disposed may be referred to as a front surface of the electronic device 101. The electronic device 101 changing the shape of the flexible display 130 by may include an operation of changing at least one of a width, a height, and/or extent of at least a portion of the flexible display 130 exposed to the outside. An active area and/or a display area of the flexible display 130 may correspond to an area formed by pixels disposed in the at least a portion of the flexible display 130 exposed to the outside among pixels of the flexible display 130.

In an embodiment, as the positional relationship between the first housing 111 and the second housing 112 is adjusted, the at least a portion of the flexible display 130 may be inserted into the housing 110 of the electronic device 101 or extracted from the housing 110. Hereinafter, an embodiment of the electronic device 101 including the flexible display 130 that is inserted into the first housing 110 or extracted from the first housing 111, by movement of the second housing 112 with respect to the first housing 111 is described, but the embodiment is not limited thereto.

The electronic device 101 according to an embodiment may include one or more antennas to wirelessly perform a communication function. Referring to FIG. 1, a rear surface 101-2 opposite to the front surface of the electronic device 101 in which the flexible display 130 is disposed is illustrated. The electronic device 101 may include an MST antenna 150 for magnetic secure transmission (MST). The electronic device 101 may include an NFC antenna 160 for near field communication (NFC). The MST antenna 150 and the NFC antenna 160 may be spaced apart from each other from a perspective of viewing the rear surface 101-2 in a direction perpendicular to the rear surface 101-2 in the electronic device 101. For example, from the perspective, the MST antenna 150 may be disposed at a position overlapping a battery of the electronic device 101. The MST antenna 150 may be disposed together with a wireless power charge (WPC) antenna (coil) for transmitting and/or receiving power stored in the battery. From the perspective, the NFC antenna 160 may be disposed at a different position spaced apart from the position of the rear surface 101-2 in which the MST antenna 150 is disposed. For example, the NFC antenna 160 may be disposed adjacent to an edge 112-2 among edges of the second housing 112. The edge 112-2 of the second housing 112 adjacent to the NFC antenna 160 may correspond to an edge farthest from the first housing 111, among the edges of the second housing 112. The edge 112-2 of the second housing 112 in which the NFC antenna 160 is disposed adjacent may be opposed to another edge of the second housing 112 facing the first housing 111.

Referring to FIG. 1, an example of a screen displayed in the flexible display 130 by the electronic device 101 performing the communication function is illustrated. The electronic device 101 according to an embodiment may display a screen associated with the communication function within the flexible display 130 in a state of executing the communication function associated with the MST antenna 150 and/or the NFC antenna 160. The electronic device 101 may wirelessly transmit or/or receive a signal through the MST antenna 150 and/or the NFC antenna 160 based on execution of the communication function.

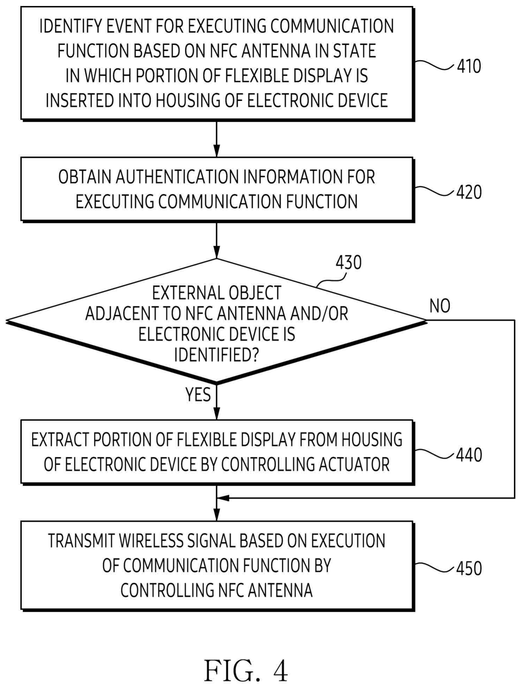

Referring to FIG. 1, an embodiment of the electronic device 101 communicating with an external electronic device 102 using the MST antenna 150 and/or the NFC antenna 160 is illustrated. The electronic device 101 according to an embodiment may change, while transmitting a signal to the external electronic device 102 through the NFC antenna 160, a position of the NFC antenna 160 with respect to an external object (e.g., a hand 120 holding the electronic device 101) to prevent blocking of the signal by the external object. The electronic device 101 may transform the housing 110 to change the position of the NFC antenna 160. In one embodiment, the electronic device 101 transforming the housing 110 may include an operation of moving the second housing 112 with respect to the first housing 111. An example of an operation of the electronic device 101 for adjusting the position of the NFC antenna 160 based on the transformation of the housing 110 will be described with reference to FIGS. 4 to 11.

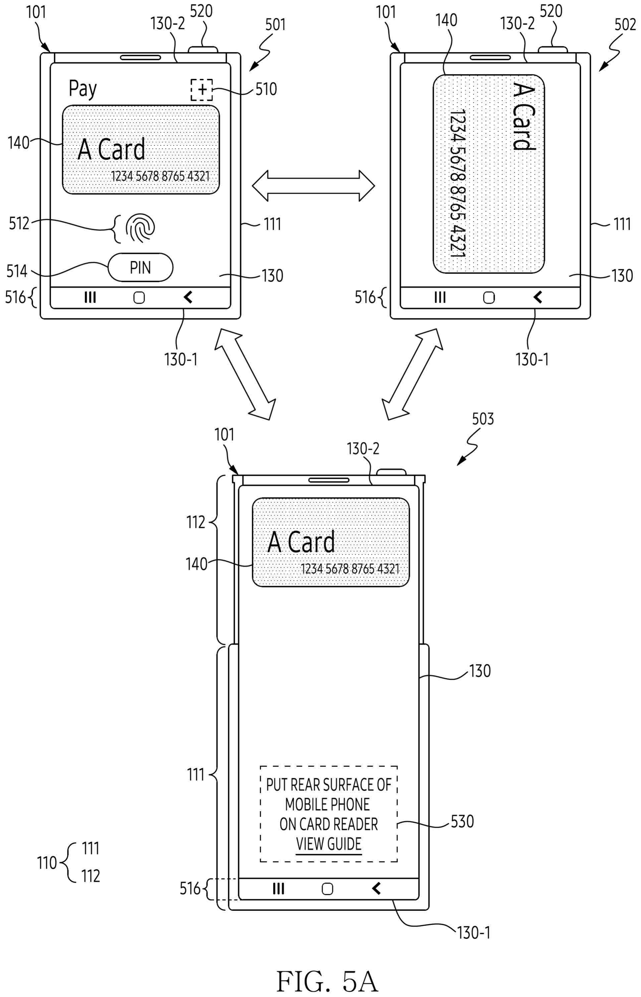

Referring to FIG. 1, an embodiment in which the electronic device 101 transmits or receives information for payment using the MST antenna 150 and/or the NFC antenna 160. In an embodiment in which the electronic device 101 transmits the information for the payment using the MST antenna 150 and/or the NFC antenna 160, the external electronic device 102 may correspond to a device (e.g., point of sales (POS)) that performs the payment based on the information. In a state in which the portion of the flexible display 130 is inserted into the housing 110 (e.g., the first housing 111) of the electronic device 101, the electronic device 101 may display a visual object 140 associated with the payment in the active area of the flexible display 130 having a height h1. An embodiment of the electronic device 101 displaying the visual object 140 including an image of a credit card is illustrated, but the embodiment is not limited thereto. An example of an operation of the electronic device 101 displaying the visual object 140 based on execution of a software application for the payment will be described with reference to FIGS. 5A to 5C.

In an embodiment, while the portion of the flexible display 130 is inserted into the housing 110 (e.g., the first housing 111), the electronic device 101 may identify movement of the electronic device 101 moved to the external electronic device 102 by the hand 120. Referring to FIG. 1, the hand 120 having a posture surrounding the rear surface 101-2 of the electronic device 101 may be positioned between the NFC antenna 160 and the external electronic device 102. The hand 120 positioned between the NFC antenna 160 and the external electronic device 102 may block a wireless signal transmitted to the external electronic device 102 through the NFC antenna 160. For example, a strength of the wireless signal received by the external electronic device 102 may be reduced to less than or equal to a preset strength set for receiving the wireless signal by the hand 120. For example, a bit error rate (BER) of the wireless signal received by the external electronic device 102 may be increased by the hand 120.

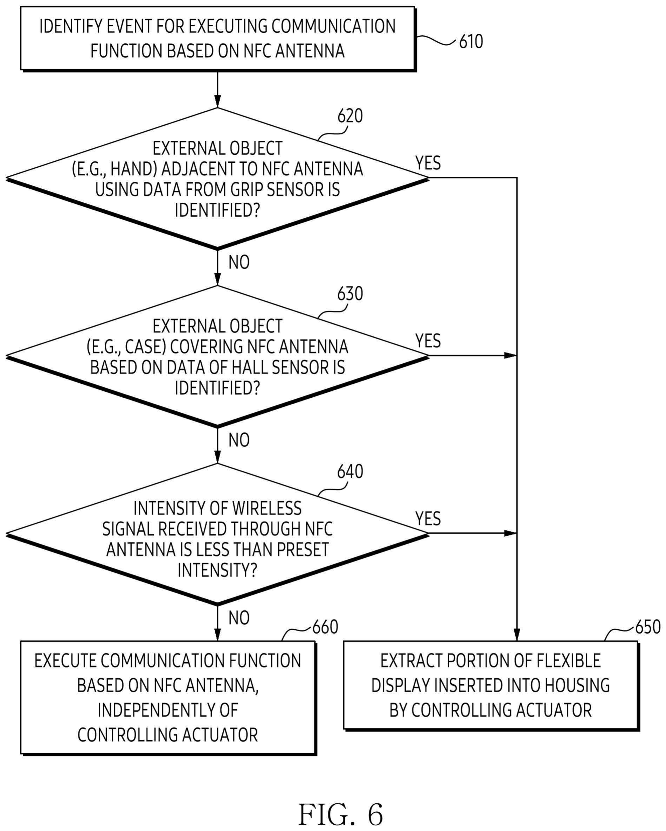

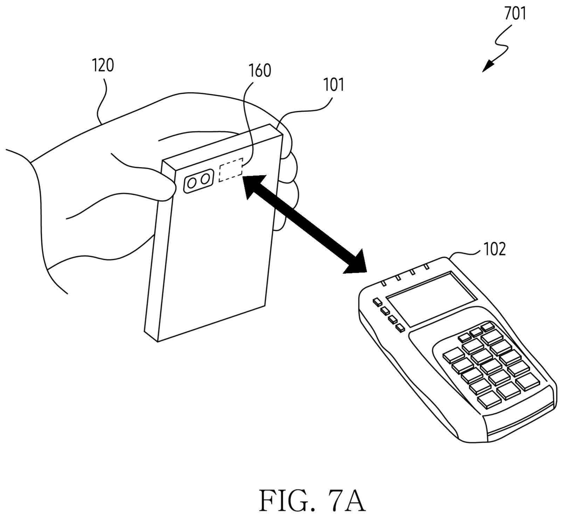

The electronic device 101 according to an embodiment may initiate the movement (or the transformation of the housing 110) of the second housing 112 with respect to the first housing 111 based on identifying an external object that interferes with communication between the NFC antenna 160 and the external electronic device 102, such as the hand 120. For example, the electronic device 101 that includes the actuator (e.g., the actuator 330 of FIG. 3) controlling the

**EP 4 686 181 A1**

movement of the second housing 112 with respect to the first housing 111 may control the actuator. The electronic device 101 according to an embodiment may control the actuator to extract the portion of the flexible display 130 from the first housing 111. Referring to FIG. 1, a height of the active area may be increased from the height h1 to a height h2 based on the extraction of the portion of the flexible display 130 from the first housing 111. For example, based on the extraction, the electronic device 101 may extend or enlarge, (magnify, or expand) the active area. An operation of the electronic device 101 performed based on identifying the external object will be described with reference to FIGS. 6, 7A to 7C.

Referring to FIG. 1, the position of the NFC antenna 160 in the electronic device 101 may be changed based on the electronic device 101 extracting the second housing 112 from the first housing 111. The change in the position of the NFC antenna 160 may mean that a relative position of the NFC antenna 160 with respect to the first housing 111 is changed. For example, the change in the position of the NFC antenna 160 may mean that the NFC antenna 160 moves away from the first housing 111 by the extraction of the second housing 112. For example, the NFC antenna 160 disposed adjacent to the edge 112-2 of the second housing 112 may move away from the external object including the hand 120. In an exemplary case in which the hand 120 is positioned between the NFC antenna 160 and the external electronic device 102, the NFC antenna 160 may move away from the hand 120 by the extraction of the second housing 112. For example, as the NFC antenna 160 moves away from the hand 120, the wireless signal transmitted from the NFC antenna 160 may be propagated to the external electronic device 102 independently of the hand 120.

The electronic device 101 according to an embodiment may adjust the position of the NFC antenna 160 based on identifying the external object between the external electronic device 102 and the NFC antenna 160 such as the hand 120. Based on the adjustment of the position of the NFC antenna 160, the wireless signal transmitted from the NFC antenna 160 may be directly transmitted to the external electronic device 102. Since the wireless signal is directly transmitted to the external electronic device 102, the strength of the wireless signal received by the external electronic device 102 may be increased. Since the wireless signal is directly transmitted to the external electronic device 102 independently of the external object such as the hand 120, the BER of the wireless signal may be reduced. For example, the electronic device 101 may prevent blocking of the wireless signal by the hand 120 and complete the communication function based on the wireless signal.

The electronic device 101 according to an embodiment may move the visual object 140 in the active area based on the position of the NFC antenna 160 adjusted based on the extraction of the second housing 112 and/or the flexible display 130. Referring to FIG. 1, in the active area extended to the height h2 by the extraction of the flexible display 130 from the height h1, the electronic device 101 may move the visual object 140 to an edge 130-2 adjacent to the NFC antenna 160 among edges 130-1 and 130-2 of the flexible display 130. The electronic device 101 may display an animation in which the visual object 140 gradually moves to the edge 130-2 while the display 130 is extracted. For example, the visual object 140 in the active area may at least partially overlap the NFC antenna 160 from the perspective of viewing a front surface in a direction perpendicular to the flexible display 130. For example, the edge 130-2 of the flexible display 130 displayed adjacent to the visual object 140 may correspond to the edge 112-2 of the second housing 112 adjacent to the NFC antenna 160.

As described above, the electronic device 101 according to an embodiment may include the MST antenna 150 and the NFC antenna 160 disposed at positions controlled by the transformation of the housing 110. In a case of identifying the external object (e.g., the hand 120) restricting transmission of the wireless signal based on the NFC antenna 160, the electronic device 101 may transform the housing 110 and display a screen (e.g., a screen including the visual object 140 moved toward the edge 112-2 of the second housing 112) associated with the position of the NFC antenna 160 in the transformed housing 110. Based on the screen, the electronic device 101 may enable the user to move the electronic device 101 so that the NFC antenna 160 faces the external electronic device 102. The electronic device 101 may improve communication with the external electronic device 102 based on the NFC antenna 160 by using the transformation of the housing 110, and the screen.

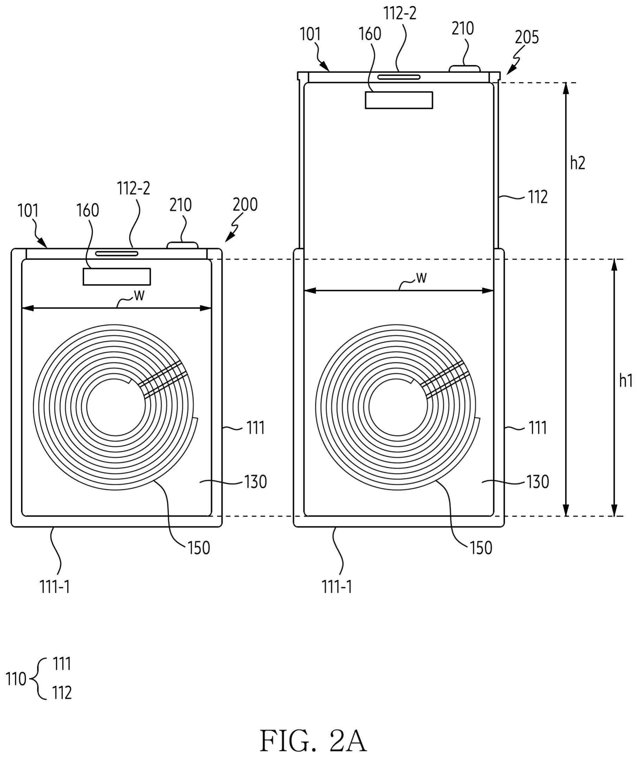

FIGS. 2A to 2B illustrate an embodiment of an electronic device 101 including one or more antennas. The electronic device 101 of FIG. 1 may correspond to an example of the electronic device 101 of FIGS. 2A to 2B. For example, the electronic device 101 of FIGS. 2A to 2B may include the housing 110 (e.g., the first housing 111 and/or the second housing 112), the flexible display 130, the MST antenna 150, and/or the NFC antenna 160 of FIG. 1.

In an embodiment of FIGS. 2A to 2B, the second housing 112 of the electronic device 101 may be slidably coupled to the first housing 111. The flexible display 130 may be inserted into the first housing 111 or may be extracted from the first housing 111 by movement of the second housing 112 with respect to the first housing 111. In a case that the flexible display 130 is inserted into the first housing 111, a size of an active area of the flexible display 130 exposed to the outside may be reduced. In a case that the flexible display 130 is extracted from the first housing 111, the size of the active area may be increased. The electronic device 101 may adjust the size of the active area by inserting the flexible display 130 into the first housing 111 or extracting the flexible display 130 from the first housing 111, using an actuator (e.g., the actuator 330 of FIG. 3).

Referring to FIGS. 2A to 2B, different states 200 and 205 of the electronic device 101 and/or the flexible display 130 are illustrated. The electronic device 101 according to an embodiment may switch between the states 200 and 205 using the actuator. In an embodiment, the states 200 and 205 of the electronic device 101 may be classified according to dimensions (e.g., a width, a height, a thickness, and/or an aspect ratio) of the electronic device 101 and/or the flexible display 130. The states 200 and 205 may be classified according to a distance between the first housing 111 and the second housing 112 of the electronic device 101. For example, the distance between the first housing 111 and the second housing 112 may be a distance between a side surface of the first housing 111 and a side surface of the second housing 112 parallel to each other among side surfaces of the electronic device 101 connecting a front surface and a rear surface of the electronic device 101.

Each of the states 200 and 205 of FIGS. 2A to 2B may be a state in which a surface area of the electronic device 101 and/or extent of an active area (or a display area) of the flexible display 130 are minimized or maximized as the electronic device 101 is transformed. Hereinafter, the state in which the surface area of the electronic device 101 and/or the extent of the active area is minimized (e.g., the state 200) may be referred to as a slide-in state, a rolled state, a closed state, a roll-in state, and/or a contraction or reduction state. Hereinafter, the state in which the surface area of the electronic device 101 and/or the extent of the active area is maximized (e.g., the state 205) may be referred to as a slide-out state, an unfolded state, a roll-out state, an extended state, and/or an enlarged or expanded state. In an embodiment, a state of the electronic device 101 may further include another state between the slide-in state (e.g., the state 200) in which the extent of the active area is the minimum and the slide-out state (e.g., the state 205) in which the extent of the active area is the maximum. The other state may be referred to as an intermediate state, a free-stop state, a sub-rolled state, and/or a sub-opened state.

Referring to FIGS. 2A to 2B, the flexible display 130 included in the electronic device 101 according to an embodiment may have a rectangular shape. In an embodiment, corners of the flexible display 130 may have a rounded corner shape. Hereinafter, among sides that are boundaries of the rectangular flexible display 130, a first direction parallel to a relatively long side may be referred to as a height direction, and the relatively long side may be referred to as the height. Hereinafter, among the sides that are the boundaries of the rectangular flexible display 130, a second direction parallel to a relatively short side may be referred to as a width direction, and the relatively short side may be referred to as the width.

Referring to FIG. 2A, an embodiment in which the electronic device 101 transforms a shape of the electronic device 101 along the height direction among the width direction or the height direction of the flexible display 130 is illustrated. A height h1 in the state 200 of FIG. 2A may be a minimum value of a height of the active area at a moment (e.g., the slide-in state) when extent of a portion of the flexible display 130 exposed to the outside is minimized. For example, with respect to a width w of the active area, a ratio of the height and the width in the state 200 may be 4.5:3. A height h2 of the flexible display 130 in the state 205 of FIG. 2A may be a maximum value of the height of the active area at a moment (e.g., the slide-out state) when the extent of the portion of the flexible display 130 exposed to the outside is maximized. For example, with respect to the width w of the active area, a ratio of the height and the width in the state 205 may be 21:9. It may be a maximum value of the height of the deformable flexible display 130. Although not illustrated, the state of the electronic device 101 may include not only the states 200 and 205, but also an intermediate state in which a ratio of the height and the width is 16:9.

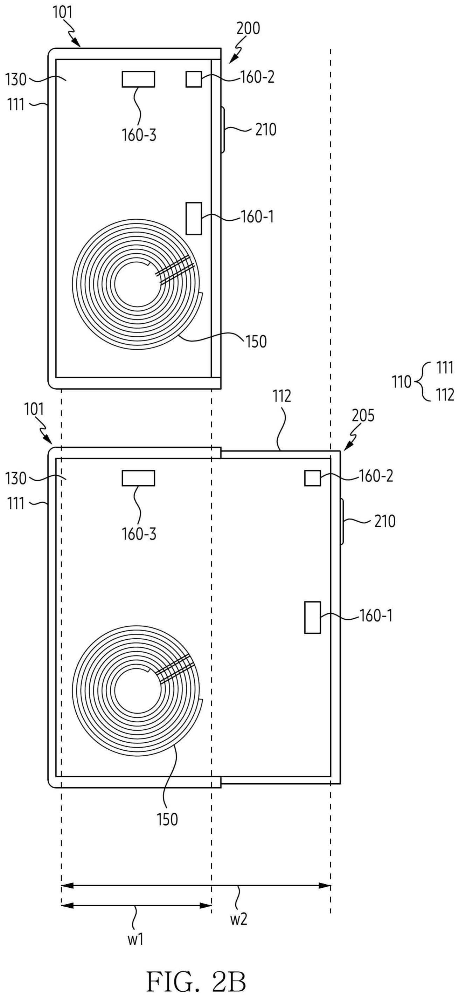

Referring to FIG. 2B, an embodiment in which the electronic device 101 transforms the shape of the electronic device 101 along the width direction among the width direction or the height direction is illustrated. Each of the width w1 in the state 200 of FIG. 2B and the width w2 in the state 205 may be a minimum value and a maximum value of the width of the deformable flexible display 130. As the height and/or the width of the flexible display 130 is adjusted, the electronic device 101 may change the aspect ratio of the flexible display 130 to an aspect ratio suitable for content outputted from the electronic device 101. For example, the aspect ratio may be selected from 4.5:3, 16:9, and 21:9.

The electronic device 101 according to an embodiment may identify a state corresponding to a current shape of the electronic device 101, from among the states 200 and 205 and the intermediate state between the states 200 and 205, using one or more sensors (e.g., Hall sensor). In an embodiment in which the electronic device 101 includes the Hall sensor, a magnet included in the Hall sensor may be disposed in the first housing 111, and one or more magnetic sensors included in the Hall sensor may be disposed in the second housing 112. In the embodiment, a size of the magnetic field, identified by each of the one or more magnetic sensors and generated by the magnet, may be changed according to a positional relationship between the first housing 111 and the second housing 112. In the embodiment, the electronic device 101 may identify the shape of the electronic device 101 based on the size of the magnetic field identified by the one or more magnetic sensors. The electronic device 101 identifying the shape may be performed based on an operating system and/or firmware being executed on a processor (e.g., a processor 310 of FIG. 3) of the electronic device 101.

The electronic device 101 according to an embodiment may change the shape of the flexible display 130 and/or the electronic device 101 between the states 200 and 205 by activating the actuator (e.g., the actuator 330 of FIG. 3). The electronic device 101 according to an embodiment may change the shape in response to identifying a preset event. For example, the preset event may include a software interrupt (SWI) generated from an operating system, firmware, and/or an application being executed on the electronic device 101. The software interrupt may be generated by an application for playing multimedia content (e.g., video) having a specific aspect ratio. The software interrupt may be generated based on a position of the electronic device 101 identified by the one or more sensors. The software interrupt may be generated based on a condition (e.g., a condition indicated by time, place, occasion, or a combination thereof) inputted by the electronic device 101 and/or a user.

In an embodiment, the preset event for changing the shape of the flexible display 130 and/or the electronic device 101 may be generated based on a gesture of the user. For example, the preset event may be generated by a gesture performed on the flexible display 130. The gesture may include at least one of a pinch-to-zoom gesture, a swipe gesture, a drag gesture, or a gesture of tapping a preset visual object (e.g., an icon in which an aspect ratio is displayed) displayed on the flexible display 130. For example, the gesture may be generated by pressing a button 210 exposed to the outside from a portion of the housing 110 of the electronic device 101.

The electronic device 101 according to an embodiment may include the button 210 for receiving an input for changing the shape of the flexible display 130 and/or the electronic device 101. Referring to FIGS. 2A to 2B, the button 210 exposed to the outside from at least a portion of the housing 110 of the electronic device 101 is illustrated. In response to identifying the gesture of pressing the button 210, the electronic device 101 may identify the input by the user. In an embodiment in which the button 210 is mapped to a plurality of functions (e.g., a power management function and/or a fingerprint recognition function), the electronic device 101 may identify the input based on a pressure to press the button 210, duration in which an external object (e.g., a fingertip of the user) is in contact with the button 210, and/or duration in which the button 210 is pressed. For example, a first gesture of pressing the button 210 beyond preset duration (e.g., 5 seconds) may be matched to an input of turning on or off the electronic device 101. In the above example, a second gesture of pressing the button 210 shorter than the preset duration may be matched to an input for changing the shape. A position of the button 210 is not limited to examples of FIGS. 2A and/or 2B.

Referring to FIGS. 2A to 2B, the electronic device 101 according to an embodiment may include the MST antenna 150 disposed in the first housing 111. The MST antenna 150 may include a coil antenna disposed on a flexible printed circuit board (FPCB). The MST antenna 150 may be formed on a surface of the first housing 111 in which an antenna (e.g., a WPC antenna) for wireless charging is disposed. The electronic device 101 may transmit or receive a wireless signal based on a magnetic field using the MST antenna 150.

Referring to FIGS. 2A to 2B, the electronic device 101 according to an embodiment may include the NFC antenna 160 disposed in the second housing 112. The NFC antenna 160 may be disposed at a position spaced apart from the MST antenna 150 on the FPCB on which the MST antenna 150 is disposed. For example, the NFC antenna 160 may correspond to another coil antenna that is different from the coil antenna for the MST antenna 150 on the FPCB. The embodiment is not limited thereto, and the NFC antenna 160 may include a patch antenna and/or a chip antenna. The electronic device 101 may transmit or receive a wireless signal within a frequency (e.g., 13.56 MHz) for the NFC using the NFC antenna 160. Based on the NFC antenna 160, the electronic device 101 may support different modes associated with the NFC. The modes may include a mode (e.g., a read/write mode) in which information on an external electronic device (e.g., an NFC tag) supporting the NFC is read or stored in the external electronic device, a mode (e.g., a card emulation mode) transmitting information to an external electronic device (e.g., the external electronic device 102 of FIG. 1) supporting the NFC, and/or a mode (e.g., a peer-to-peer mode) for exchanging information.

Referring to FIGS. 2A to 2B, the MST antenna 150 and the NFC antenna 160 may be disposed in the first housing 111 and the second housing 112 of the electronic device 101, respectively. For wireless charging, the WPC antenna and/or the MST antenna 150 may be disposed on a portion of the first housing 111 adjacent to a lower end (e.g., an edge 111-1 of the first housing 111) of the electronic device 101. For example, based on the center of gravity of the electronic device 101, the MST antenna 150 may be disposed adjacent to the edge 111-1 of the first housing 111. The NFC antenna 160 may be disposed in the second housing 112 different from the first housing 111 in which the MST antenna 150 is disposed. From a perspective of viewing the electronic device 101 in a direction perpendicular to the front surface and/or the rear surface of the electronic device 101, the MST antenna 150 and the NFC antenna 160 may be disposed at positions that do not overlap each other. For example, in a case that the MST antenna 150 is adjacent to the edge 111-1 of the first housing 111, the NFC antenna 160 may be adjacent to an edge 112-2 of the second housing 112 opposite to the edge 111-1 of the first housing 111.

Referring to FIGS. 2A to 2B, a distance between the NFC antenna 160 disposed in the second housing 112 that is insertable into the first housing 111 and the first housing 111 may be changed by movement of the second housing 112 with respect to the first housing 111. Referring to FIG. 2A, the distance between the NFC antenna 160 and the first housing 111 may increase while switching from the state 200 corresponding to the slide-in state to the state 205 corresponding to the slide-out state. In a case that the hand 120 of FIG. 1 is in contact with the first housing 111, a distance between the NFC antenna 160 and the hand 120 may increase as the second housing 112 inserted into the first housing 111 is extracted from the first housing 111. For example, the electronic device 101 may make a position of the NFC antenna 160 spaced apart from the hand 120 holding the first housing 111. The electronic device 101 according to an embodiment may change the position of the NFC antenna 160 with respect to the hand 120 without requiring a change (e.g., re-grip) in a posture and/or a position of the hand 120 holding the first housing 111. Based on the change in the position of the NFC antenna 160, the electronic device 101 may prevent a wireless signal transmitted through the NFC antenna 160 from being blocked by the hand 120.

Referring to FIG. 2B, the NFC antenna 160 may be disposed at different positions spaced apart from the MST antenna 150 within the electronic device 101 including the second housing 112 that is slidable with respect to the first housing 111 along the width direction of the flexible display 130. For example, the NFC antenna 160 may be included in the second housing 112 different from the first housing 111 in which the MST antenna 150 is disposed, such as an NFC antenna 16-1 at a first position and/or an NFC antenna 160-2 at a second position. In a case that the second housing 112 is extracted from the first housing 111, a distance formed between the NFC antenna 160-1 at the first position and the NFC antenna 160-2 at the second position and the first housing 111 may increase. The embodiment is not limited thereto, and the NFC antenna 160 may be disposed at a portion of the first housing 111 spaced apart from the MST antenna 150, from a perspective of viewing the front surface of the electronic device 101 in a direction perpendicular to the front surface, such as an NFC antenna 160-3 at a third position.

As described above, the electronic device 101 according to an embodiment may deal with a situation in which a wireless signal transmitted through the NFC antenna 160 is blocked by a grip without changing the grip of the user on the electronic device 101 by disposing the NFC antenna 160 in the second housing 112 that is extractable from the first housing 111, from among the first housing 111 and the second housing 112 that are intercoupled. For example, the electronic device 101 may increase a distance between the hand in contact with the first housing 111 and the NFC antenna 160 for the grip based on the movement of the second housing 112 with respect to the first housing 111. Based on the increased distance, the electronic device 101 may prevent the wireless signal from being blocked by the hand and may support direct wireless communication between the NFC antenna 160 and the external electronic device (e.g., the external electronic device 102 of FIG. 1).

Hereinafter, referring to FIG. 3, one or more hardware included in the electronic device 101 to support the direct wireless communication between the NFC antenna 160 and the external electronic device (e.g., the external electronic device 102 of FIG. 1), will be described.

FIG. 3 is a block diagram of an electronic device 101 according to an embodiment. The electronic device 101 of FIG. 1, 2A and/or 2B may include one or more hardware and/or programs described with reference to FIG. 3.

Referring to FIG. 3, the electronic device 101 according to an embodiment may include at least one of a processor 310, memory 320, a flexible display 130, an actuator 330, a communication module 350, or one or more sensors 360. The processor 310, the memory 320, the flexible display 130, the actuator 330, the communication module 350, and the one or more sensors 360 may be electrically and/or operably coupled with each other by an electronical component (or an electrical component) such as a communication bus. Although illustrated based on different blocks, an embodiment is not limited thereto. A type and/or the number of hardware components included in the electronic device 101 is not limited as illustrated in FIG. 3. For example, the electronic device 101 may include only some of the hardware components illustrated in FIG. 3. Although not illustrated, the electronic device 101 may further include a housing (e.g., a housing 110, a first housing 111, and/or a second housing 112) forming an exterior of the electronic device 101.

The processor 310 of the electronic device 101 according to an embodiment may include a hardware component for processing data based on one or more instructions. For example, the hardware component for processing data may include an arithmetic and logic unit (ALU), a floating point unit (FPU), a field programmable gate array (FPGA), an application processor (AP), a central processing unit (CPU), and/or the application processor (AP). The number of processors 310 may be one or more. For example, the processor 310 may have a structure of a multi-core processor such as a dual core, a quad core, or a hexa core.

The memory 320 of the electronic device 101 according to an embodiment may include a hardware component for storing data and/or instructions inputted to the processor 310 and/or outputted from the processor 310. The memory 320 may include, for example, volatile memory such as random-access memory (RAM) and/or non-volatile memory such as read-only memory (ROM). The volatile memory may include, for example, at least one of dynamic RAM (DRAM), static RAM (SRAM), cache RAM, and pseudo SRAM (PSRAM). The non-volatile memory may include, for example, at least one of Programmable ROM (PROM), Erasable PROM (EPROM), Electrically Erasable PROM (EEPROM), flash memory, a hard disk, a compact disk, and an embedded multi-media card (eMMC).

The flexible display 130 of the electronic device 101 according to an embodiment may output visualized information to a user. In an embodiment, the flexible display 130 may be deformable by an external force applied to the flexible display 130. The flexible display 130 may include a Liquid Crystal Display (LCD), a Plasma Display Panel (PDP), one or more Light Emitting Diode (LEDs), and/or one or more OLEDs. An exemplary structure of the electronic device 101 to transform a shape of the flexible display 130 will be described later with reference to FIGS. 12A to 12D, FIGS. 13A to 13B, and FIGS. 14A to 14B.

The flexible display 130 according to an embodiment may include a sensor (e.g., a touch sensor panel (TSP)) for detecting an external object (e.g., a finger of the user) on the flexible display 130. For example, based on the TSP, the electronic device 101 may detect the external object that is contacted on the flexible display 130 or floating on flexible display 130. In response to detecting the external object, the electronic device 101 may execute a function associated with a specific visual object corresponding to a portion in the flexible display 130 on which the external object is contacted among visual objects displayed in the flexible display 130.

The actuator 330 of the electronic device 101 according to an embodiment may change the shape of the flexible display 130 and/or the electronic device 101. The actuator 330 may be referred to as a driving unit and/or driving circuitry. The actuator 330 may include hardware (e.g., a motor 332) for outputting kinetic energy from electrical energy. In an embodiment in which the actuator 330 includes the motor 332, the actuator 330 may include motor driving circuitry 334 for controlling the motor 332. The actuator 330 may include a gear (e.g., a rack gear) for changing a rotational motion of the motor 332 into a linear motion (or a translation motion) applied to the flexible display 130.

In an embodiment, the actuator 330 may include a plurality of gears that are engaged to each other to adjust a rotational force (e.g., torque) of the motor. The plurality of gears may be referred to as a gear assembly or a transmission unit of the actuator 330. The actuator 330 according to an embodiment may adjust a speed and/or a direction at which the flexible display 130 and/or the electronic device 101 is transformed by changing a frequency, voltage, and/or a current of a power signal applied to the motor 332 by being controlled by the processor 310. In an embodiment, the actuator 330 may adjust the speed and/or the direction at which the flexible display 130 and/or the electronic device 101 is transformed by adjusting a positional relationship of the plurality of gears included in the gear assembly and/or a gear ratio between the gears that are engaged to each other.

The communication module 350 of the electronic device 101 according to an embodiment may include a hardware component for supporting transmission and/or reception of data between the electronic device 101 and an external electronic device (e.g., the external electronic device 102 of FIG. 1). The communication module 350 may include, for example, at least one of MODEM, an antenna, and an Optic/Electronic (O/E) converter. The communication module 350 may support transmission and/or reception of an electrical signal based on various types of protocols such as Ethernet, a Local Area Network (LAN), a Wide Area Network (WAN), Wireless Fidelity (WiFi), Bluetooth, Bluetooth Low Energy (BLE), ZigBee, Long Term Evolution (LTE), 5G New Radio (NR), and/or NFC.

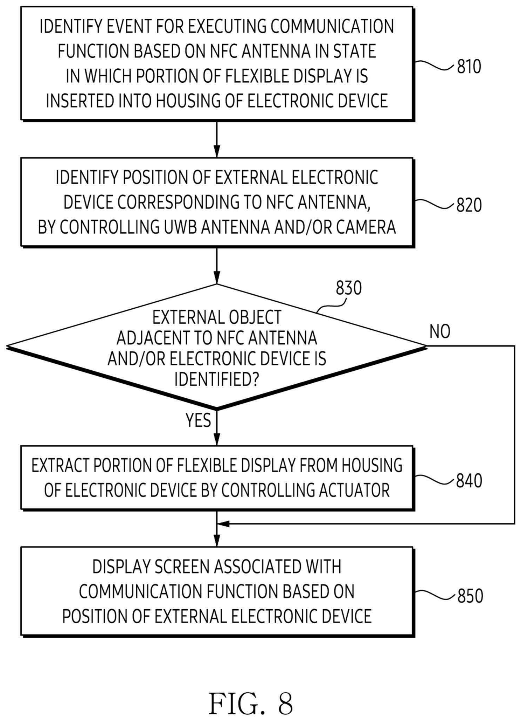

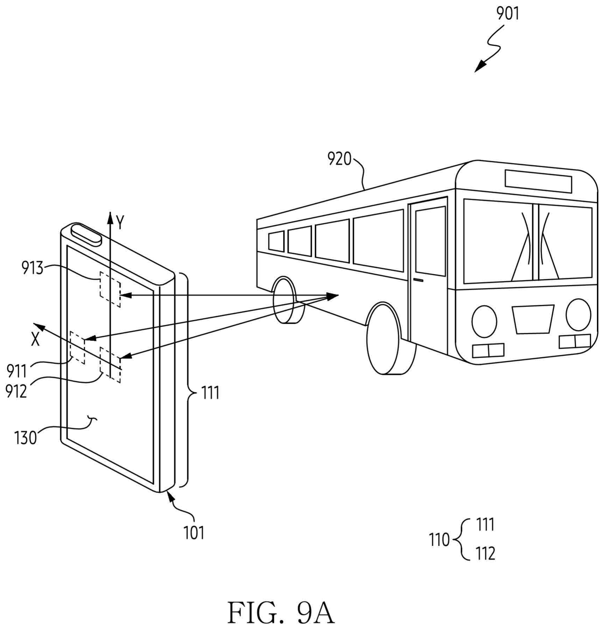

In an embodiment, for processing a wireless signal, the communication module 350 may include RF circuitry 352 driven based on a frequency band of the wireless signal. The communication module 350 may include an NFC antenna 354 (e.g., the NFC antenna 160 of FIGS. 1, 2A or 2B) for transmission and/or reception of a wireless signal based on the NPC. The communication module 350 may include an MST antenna 356 (e.g., the MST antenna 150 of FIGS. 1, 2A or 2B) for transmission and/or reception of a wireless signal based on MST. The communication module 350 may include one or more UWB antennas 358 for transmission and/or reception of a wireless signal based on ultra-wideband (UWB). The electronic device 101 may include a plurality of UWB antennas 358 to detect an external object using the UWB. An operation of the electronic device 101 based on the plurality of UWB antennas 358 will be described with reference to FIGS. 8, 9A to 9C.

The one or more sensors 360 of the electronic device 101 according to an embodiment may generate electronic information that may be processed by the processor 310 and/or the memory 320 from non-electronic information associated with the electronic device 101. Referring to FIG. 3, as an example of the one or more sensors 360 included in the electronic device 101, a grip sensor 361, a Hall sensor 362, an image sensor 363, a global positioning system (GPS) sensor 364, and/or a biometric authentication sensor 365 are illustrated. The embodiment is not limited thereto, and for example, the one or more sensors 360 may further include an inertial measurement unit (IMU) sensor, a time-of-flight (ToF) sensor, an illumination sensor, and/or a proximity sensor.

The grip sensor 361 of the electronic device 101 according to an embodiment may detect a grip on the housing of the electronic device 101. The grip may be generated by a hand (e.g., the hand 120 of FIG. 1) of the user holding the electronic device 101. The grip sensor 361 may obtain data (e.g., sensor data) dependent on the grip based on an electric field formed in a space adjacent to the electronic device 101. The processor 310 may identify the grip or a release of the grip based on the data obtained from the grip sensor 361. Based on identifying the grip, the electronic device 101 may output data indicating a posture of the hand holding the electronic device 101 for the grip using the data of the grip sensor 361.

The Hall sensor 362 of the electronic device 101 according to an embodiment may include a magnet and a magnetic field sensor that measures a change in a magnetic field formed by the magnet. The magnet and the magnetic field sensor may be disposed in different portions of the housing of the electronic device 101. The magnetic field measured by the magnetic field sensor may be adjusted by a distance between the portions. The embodiment is not limited thereto, and as the magnetic field is changed by an external object (e.g., the hand 120 of FIG. 1) adjacent to the electronic device 101, the magnetic field measured by the magnetic field sensor may be changed. Based on a change in the magnetic field identified by the Hall sensor 362, the processor 310 may identify the distance between the portions. Based on the distance between the portions, the processor 310 may identify a shape of the housing of the electronic device 101. In a case that the electronic device 101 is adjacent to the external object, the processor 310 may identify the external object based on the magnetic field identified by the Hall sensor 362. For example, sensor data outputted from the Hall sensor 362 may be dependent on the distance between the portions, the shape of the housing of the electronic device 101, and/or the external object adjacent to the electronic device 101.

The image sensor 363 of the electronic device 101 according to an embodiment may include one or more optical sensors (e.g., a charged coupled device (CCD) sensor and a complementary metal oxide semiconductor (CMOS) sensor) that generate an electrical signal indicating a color and/or brightness of light. A plurality of optical sensors included in the image sensor 363 may be disposed in the form of a 2 dimensional array. The image sensor 363 may generate an image, including a plurality of pixels arranged in two dimensions, and corresponding to light reaching the optical sensors of the 2 dimensional array, by obtaining an electrical signal of each of the plurality of optical sensors substantially simultaneously.

The GPS sensor 364 of the electronic device 101 according to an embodiment may output data indicating a geographic location of the electronic device 101. In addition to a GPS method, the GPS sensor 364 may generate information indicating the geographic location of the electronic device 101 using a global navigation satellite system (GNSS) such as Galileo and Beidou (compass).

The biometric authentication sensor 365 of the electronic device 101 according to an embodiment may be configured to receive biometric information for authenticating a user. For example, the biometric authentication sensor 365 may output data indicating a fingerprint of a finger contacted on the electronic device 101. For example, the biometric authentication sensor 365 may identify, by being disposed adjacent to a portion of the flexible display 130, the fingerprint of the finger contacted on the portion. The biometric authentication sensor 365 may identify the fingerprint of the finger contacted on a surface of the button 210 by being disposed on the button 210 of FIGS. 2A and/or 2B. Based on the data outputted from the biometric authentication sensor 365, the processor 310 may identify and/or authenticate a user corresponding to the fingerprint identified by the biometric authentication sensor 365. A sensor included in the electronic device 101 to obtain the biometric information of the user is not limited to the biometric authentication sensor 365. For example, the electronic device 101 may include a ToF sensor for recognizing a shape of a face of the user and/or an iris sensor for recognizing an eyeball including an iris of the user.

Referring to FIG. 3, in the memory 320 of the electronic device 101, one or more instructions indicating a computation and/or an operation to be performed by the processor 310 on data may be stored. A set of the one or more instructions may be referred to as a program, firmware, an operating system, a process, a routine, a sub-routine and/or a software application. Hereinafter, the software application may be referred to as an application. For example, the electronic device 101 and/or the processor 310 may perform at least one of operations of FIG. 4, FIG. 6, FIG. 8, and/or FIG. 11 when a set of a plurality of instructions distributed in a form of an operating system, firmware, driver, and/or an application is executed. A program being installed in the electronic device 101 may mean that one or more instructions (and resources for executing the one or more instructions) grouped by the program are stored in the memory 320 of the electronic device 101, and that the program is stored in an executable format (e.g., a file having an extension preset by the operating system of the electronic device 101) by the processor 310 of the electronic device 101. The electronic device 101 according to an embodiment may substantially simultaneously execute programs stored in the memory 320 using the processor 310. Since the electronic device 101 substantially simultaneously executes the programs, the electronic device 101 may provide the user with a user experience based on multitasking.

Referring to FIG. 3, as an example of the program installed in the memory 320 of the electronic device 101, an input device driver 370, an event hub 371, an input dispatcher 372, an input manager 373, a sensor driver 374, a sensor manager 375, an actuator driver 376, a direction manager 377, a flexible display state manager 378, a display manager 379, a window manager 380, and/or an application 385 are illustrated. The embodiment is not limited thereto, and a power manager for managing a battery capacity and/or a temperature of the electronic device 101, a hardware renderer for processing graphic information to be displayed through the flexible display 130, a frame buffer driver for managing a buffer in the memory 320 in which the graphic information is to be stored, and/or a graphic compositor may be further installed.

Referring to FIG. 3, the input device driver 370 may be executed to control one or more hardware included in the electronic device 101 to receive a user input (e.g., a touch input, a key input, and/or a mouse input). The event hub 371 may be executed to generate event information that is processable by a program from events occurring in hardware (e.g., one or more hardware corresponding to the input device driver 370) of the electronic device 101. The input dispatcher 372 may be executed to call a function of a target process based on the event information corresponding to the user input. The input manager 373 may be executed to set information (e.g., display view port information) for processing raw data of input hardware such as the TSP in the electronic device 101.

Referring to FIG. 3, the sensor driver 374 may be executed to control the one or more sensors 360. For example, the sensor driver 374 may be executed to identify a state of the flexible display 130 (e.g., a state of the flexible display 130 corresponding to any one of a slide-in state, a slide-out state, and/or an intermediate state) based on data of the Hall sensor 362. The direction manager 377 may be executed to identify a direction of the electronic device 101 and/or the flexible display 130 with respect to gravity (or the ground). The sensor manager 375 may be executed to generate event information that is processable by the program, from an event identified by the one or more sensors 360. The actuator driver 376 may be executed to control the actuator 330 in response to an event for transformation of the electronic device 101 and/or the flexible display 130.

Referring to FIG. 3, the flexible display state manager 378 may be executed to determine a state of the flexible display 130 based on events generated from the one or more sensors 360. The state determined by the flexible display state manager 378 may be provided to another program (e.g., an application 385) installed in the memory 320. The display manager 379 may be executed to manage a lifecycle of a screen displayed on the flexible display 130. For example, based on execution of the display manager 379, the processor 310 may identify at least a portion of an active area in which a screen provided from the application 385 is to be outputted. Based on the execution of the display manager 379, the processor 310 may obtain a screen matching the active area controlled by the state of the flexible display 130. The window manager 380 may manage one or more graphic user interface (GUI) resources (e.g., the visual object 140 of FIG. 1) included in the screen provided from the application 385.

Referring to FIG. 3, based on execution of the application 385 installed in the memory 320, the processor 310 may access resources of the electronic device 101 provided through the above-described program. For example, the processor 310 may control the one or more hardware described above or execute one or more programs, to perform an operation indicated by instructions included in the application 385. For example, the electronic device 101 may execute a function associated with payment based on the execution of the application 385. The function associated with the payment may include a function of authenticating the user using the biometric information obtained through a sensor such as the biometric authentication sensor 365. The function associated with the payment may include a function of transmitting a wireless signal including information for the payment using the NFC antenna 354 and/or the MST antenna 356. The information for the payment included in the wireless signal is tokenized information, and may include a token value corresponding to information on a credit card (e.g., a card number) registered in the electronic device 101. The token value may be obtained by the processor of the electronic device 101 and/or an external electronic device (e.g., a tokenization server) connected to the electronic device 101.

The electronic device 101 according to an embodiment may change a position of the NFC antenna 354 by controlling the actuator 330 in order to directly transmit the wireless signal to the external electronic device through the NFC antenna 354. Together with changing the position of the NFC antenna 354, the electronic device 101 may move at least one visual object in the screen displayed through the flexible display 130, based on the changed position of the NFC antenna 354. Based on movement of the at least one visual object, the electronic device 101 may guide the user to the position of the NFC antenna 354 facing the external electronic device.

Hereinafter, an operation performed by the electronic device 101 to execute a communication function associated with the NFC antenna 354 will be described with reference to FIG. 4.

FIG. 4 illustrates an example of a flowchart of an electronic device according to an embodiment. The electronic device 101 of FIGS. 1 to 3 and/or the processor 310 of the electronic device 101 of FIG. 3 may perform operations described with reference to FIG. 4.

Referring to FIG. 4, in operation 410, a processor of the electronic device according to an embodiment may identify an event for executing a communication function based on an NFC antenna in a state in which a portion of a flexible display is inserted into a housing of the electronic device. The flexible display of the operation 410 may include the flexible display 130 of FIGS. 1 to 3. The housing of the operation 410 may include the housing 110 and/or the first housing 111 of FIGS. 1, 2A, and 2B. For example, while the portion of the flexible display 130 of FIG. 1 is inserted into the first housing 111, the processor may identify execution of the communication function on an NFC antenna 160 (or the NFC antenna 354 of FIG. 3). The processor may identify information on a state of the electronic device and/or the flexible display based on execution of the flexible display state manager 378 of FIG. 3. Based on the information, the processor may identify whether the state of the flexible display corresponds to a slide-in state. The information may be identified by an actuator (e.g., the actuator 330 of FIG. 3) and/or one or more sensors (e.g., the Hall sensor 362 of FIG. 3) for controlling the flexible display. The operation 410 may not only be performed by the processor of the electronic device in an active state, but may also be performed while an always on display (AOD) screen and/or a lock screen is displayed.

In an embodiment, the event identified by the processor based on operation 410 may be generated by an application (e.g., the application 385 of FIG. 3) associated with payment and/or a user input for the payment. The event may occur to execute a communication function based on not only the NFC antenna of the operation 410 but also an MST antenna 150 (e.g., the MST antenna 150 of FIGS. 1, 2A to 2B and/or the MST antenna 356 of FIG. 3). Based on both the NFC antenna and the MST antenna, the electronic device may support dual payment.

Referring to FIG. 4, in operation 420, the processor of the electronic device according to an embodiment may obtain authentication information for executing the communication function. For example, the processor may obtain the authentication information using the biometric authentication sensor 365 of FIG. 3. The processor obtaining the authentication information may be controlled by the application (e.g., the application 385 of FIG. 3) executed by the processor to execute the communication function. For example, based on the event identified in a state in which at least a portion of the processor is inactive for low power, such as an always-on-display (AOD) mode, the processor may obtain the authentication information of the operation 420.

In an embodiment, as an example of the authentication information obtained based on the operation 420, information obtained through a fingerprint sensor is described, but an embodiment is not limited thereto. For example, the processor may obtain authentication information including a shape of a face of the user by controlling a ToF sensor (or an image sensor). For example, the processor may obtain authentication information indicating an iris of the user by controlling an iris sensor.

The processor according to an embodiment may determine whether to execute the communication function based on the authentication information of the operation 420. For example, based on the authentication information, the processor may obtain whether the event has been generated by an authenticated user. The processor may identify whether the event of the operation 410 has been generated by a user corresponding to pre-registered authentication information by comparing the authentication information obtained by the operation 420 with the authentication information pre-registered in the processor and/or the electronic device. In a case that the event of the operation 410 has been generated by the user corresponding to the pre-registered authentication information, the processor may perform other operations (e.g., at least one of operations 430, 440, and 450) after the operation 420. In a case that the event of the operation 410 has been generated by another user different from the user corresponding to the pre-registered authentication information, the processor may at least temporarily cease to execute the communication function of the operation 410.

Referring to FIG. 4, in the operation 430, the processor of the electronic device according to an embodiment may identify an external object adjacent to the NFC antenna and/or the electronic device. The processor may identify the external object using the one or more sensors 360 (e.g., the grip sensor 361 and/or the Hall sensor 362) of FIG. 3. For example, the processor may identify a grip adjacent to the NFC antenna based on data of the grip sensor. For example, the processor may identify an external object that covers at least a portion of the housing of the electronic device, such as a phone case, based on data from the Hall sensor (or a proximity sensor). The grip identified based on the grip sensor and/or the external object may block (or interfere) a wireless signal transmitted through the NFC antenna by executing the communication function of the operation 410. To prevent blocking of the wireless signal, the processor may control the actuator.

Referring to FIG. 4, in a state of identifying the external object of the operation 430 (430-YES), the processor of the electronic device according to an embodiment may control the actuator based on the operation 440 to extract the portion of the flexible display from the housing of the electronic device. As the operation 440 is performed, the state of the electronic device may be switched to another state (e.g., a slide-out state and/or an intermediate state) different from the slide-in state. For example, the processor may control the actuator to extract the portion of the flexible display from the housing (e.g., the first housing 111 of FIGS. 1, 2A or 2B) of the electronic device, based on identifying the external object adjacent to an edge (e.g., the edge 112-2 of FIG. 1) of the housing in which the NFC antenna is disposed, based on the data of the one of more sensors.

In an embodiment, the processor of the electronic device may control the actuator based on a distance between the edge of the housing in which the NFC antenna is disposed and the external object adjacent to the edge. For example, in a case that a hand covering the edge is identified, the processor may control the actuator based on a size of the hand covering the edge. For example, the processor may control the actuator until a timing when the NFC antenna is moved out of the hand. In the timing, the state of the electronic device may correspond to the slide-out state or the intermediate state.

According to an embodiment, the processor may guide an action of the user associated with the NFC antenna by displaying a visual object (e.g., the visual object 140 of FIG. 1) in an area overlapping the NFC antenna within the active area of the flexible display extended by the extraction of the operation 440. For example, the processor may position a visual object (e.g., an image of a credit card) representing an object conventionally used for the payment in the area overlapping the NFC antenna in a state of executing the communication function for payment. Based on the visual object, the processor may guide the user to move a portion of the active area in which the visual object is displayed to a target device (e.g., the external electronic device 102 of FIG. 1) of the communication function.

Referring to FIG. 4, the operation 440 may be conditionally performed based on the operation 430. The embodiment is not limited thereto, and the processor may perform the operation 440 based on identifying the event of the operation 410. The processor performing the operation 440 based on identifying the event of the operation 410 may control the actuator based on the operation 440 and then obtain authentication information by performing the operation 420. For example, the processor may switch to another state (e.g., the slide-out state and/or the intermediate state) different from the slide-in state based on the external object of the operation 430. When the external object is not identified or before the external object of the operation 430 is identified (430-NO), the processor may bypass execution of the operation 440 or perform the operation 450 among the operations 440 and 450. In a case that the external object of the operation 430 is not identified, and/or in a case that it is possible to normally communicate with an external electronic device corresponding to the communication function by using the NFC antenna (or the MST antenna different from the NFC antenna), the processor may control the NFC antenna independently of controlling the actuator based on the operation 440. For example, in a case that the external electronic device is identified using another antenna (e.g., the MST antenna 150 of FIGS. 1, 2A to 2B, the MST antenna 356 of FIG. 3) distinguished from the NFC antenna, the processor may control the other antenna independently of controlling the actuator based on the bypass of the operation 440.

Referring to FIG. 4, in the operation 450, the processor of the electronic device according to an embodiment may transmit a wireless signal based on the execution of the communication function by controlling the NFC antenna. In a state in which the actuator is controlled based on the operation 440, the processor may perform the communication function by controlling the NFC antenna spaced apart from the external object of the operation 430 by the second housing extracted from the first housing by the actuator. Based on completion of the communication function based on transmission of the wireless signal in the operation 450, the processor may control the actuator. For example, the processor may control the actuator to insert the portion of the flexible display extracted by the operation 440 into the housing (e.g., the housing 110 and/or the first housing 111 of FIGS. 1, 2A to 2B) of the electronic device. Based on the control of the actuator, the processor may switch the state of the electronic device to the slide-in state.

As described above, the electronic device according to an embodiment may improve a user experience based on the communication function, in order to prevent ceasing the communication function based on the NFC antenna. The electronic device may include the NFC antenna (e.g., the NFC antenna 160 of FIGS. 1, 2A or 2B and/or the NFC antenna 354 of FIG. 3) disposed in the second housing (e.g., the second housing 112 of FIGS. 1, 2A or 2B) slidably coupled to the first housing (111 of FIGS. 1 and 2B) that may be held by the user. In a case that there is a high probability that the communication function based on the NFC antenna is ceased, the electronic device may change the position of the NFC antenna. The probability may be associated with the external object (e.g., the hand 120 of FIG. 1 and/or the phone case covering the electronic device) adjacent to the NFC antenna. Based on changing the position of the NFC antenna, the electronic device may increase the probability. For example, by changing the position of the NFC antenna, the electronic device may increase a distance between the NFC antenna and the external object. The electronic device may change the position without requiring an operation of the user for changing the position of the NFC antenna.

Hereinafter, an example of a screen displayed by the electronic device performing the operation of FIG. 4 will be described with reference to FIGS. 5A to 5C.

FIGS. 5A to 5C illustrate different states 501, 502, 503, 504, 505, and 506 of an electronic device 101 displaying a screen based on a position of an antenna. The electronic device 101 of FIGS. 1 to 3 and/or the processor 310 of the electronic device 101 of FIG. 3 may perform an operation described with reference to FIGS. 5A to 5C. The operation of the electronic device 101 described with reference to FIGS. 5A to 5C may be associated with at least one of the operations of FIG. 4.

Referring to FIG. 5A, the states 501 and 502 in which a portion of a flexible display 130 is inserted into a first housing 111 and the state 503 in which the portion is extracted from the first housing 111 are illustrated. The states 501 and 502 may correspond to a slide-in state of the electronic device 101. The state 503 may correspond to a slide-out state of the electronic device 101. An embodiment is not limited thereto, and at least one of the states 501, 520, and 503 may correspond to an intermediate state (or a pre-stop state) of the electronic device 101.

Referring to FIG. 5A, in the states 501, 502, and 503, the electronic device 101 may display a screen associated with a function for payment in an active area of the flexible display 130. Hereinafter, the screen may mean a user interface (UI) displayed within at least a portion of the active area. The screen may include, for example, activity of the Windows operating system and/or activity of the Android operating system. In the states 501, 502, and 503 of FIG. 5A, the electronic device 101 may display the screen in the active area of the flexible display 130 based on execution of an application (e.g., the application 385 of FIG. 3) to provide the function for payment.

Referring to the state 501 of FIG. 5A, while the portion of the flexible display 130 is inserted into the first housing 111, the electronic device 101 may display a visual object 140 in a first area of the active area of the flexible display 130. The visual object 140 may include an image representing information to be provided to an external electronic device (e.g., the external electronic device 102 of FIG. 1) that is distinguished from the electronic device 101 for the payment. In terms of representing the information to be provided to the external electronic device, the visual object 140 may correspond to the external electronic device. For example, in a case that information on a credit card to be used for the payment is stored in the electronic device 101, the visual object 140 may include text and/or an image indicating the credit card. For example, the visual object 140 may include text indicating a name of the credit card, a card number assigned to the credit card, an expiration date of the credit card, and/or a username of the credit card. For example, the visual object 140 may include an image and/or a photo of a surface (e.g., a front surface) of the credit card. In a case that information on a plurality of credit cards is stored in the electronic device 101, the electronic device 101 may further display, together with the visual object 140, another visual object for selecting another credit card different from a specific credit card corresponding to the visual object 140.

In the state 501 of FIG. 5A, the electronic device 101 may display, in the active area, visual objects 510, 512, and 514 for the function associated with the payment, together with the visual object 140. For example, the electronic device 101 may display the visual object 510 for registering a payment means different from the credit card corresponding to the visual object 140. An example of the visual object 510 in a form of a button and/or an icon including a plus character is illustrated, but the embodiment is not limited thereto. In response to an input indicating selection of the visual object 510, the electronic device 101 may display a screen for registration of the credit card (or other means to which an MST antenna and/or NFC antenna is applicable, such as a card key).

For example, the electronic device 101 may display the visual object 512 for obtaining information corresponding to a fingerprint as authentication information. An example of the visual object 512 having a shape of an image and/or an icon representing the fingerprint is illustrated, but the embodiment is not limited thereto. Using the visual object 512, the electronic device 101 may request a user of the electronic device 101 to contact a fingertip (e.g., a fingertip including the fingerprint registered in the electronic device 101) with a portion of the electronic device 101. For example, the electronic device 101 may include a fingerprint sensor (e.g., the biometric authentication sensor 365 of FIG. 3) for identifying the fingerprint of the fingertip. The electronic device 101 may display the visual object 512 on a portion of the flexible display 130 adjacent to the fingerprint sensor. The embodiment is not limited thereto, and the fingerprint sensor of the electronic device 101 may identify the fingerprint of the fingertip in contact with a surface of a button 520.

For example, the electronic device 101 may display the visual object 514 for obtaining a personal identification number (PIN) as authentication information. An example of the visual object 514 having ae form of a button including preset text such as "PIN" is illustrated, but the embodiment is not limited thereto. In response to an input indicating selection of the visual object 514, the electronic device 101 may display a screen for obtaining PIN, a password and/or a pattern. Based on the authentication information obtained based on the visual objects 512 and 514, the electronic device 101 may authenticate the user of the electronic device 101 to execute the function for payment.

Referring to FIG. 5A, the electronic device 101 may display a navigation bar 516 including a screen provided through the active area and/or objects that are executable for switching an application, in a portion of the active area. The objects included in the navigation bar 516 may include at least one of a button for displaying a list of processes being executed by the processor of the electronic device 101 based on multitasking, a button for displaying a screen (e.g., a home screen) including a list of applications installed in the electronic device 101, and/or a button for sequentially searching for screens displayed through the active area.

The electronic device 101 according to an embodiment may execute a communication function based on an NFC antenna (e.g., the NFC antenna 160 of FIGS. 1, 2A to 2B and/or the NFC antenna 354 of FIG. 3) and/or an MST antenna (e.g., the MST antenna 150 of FIGS. 1, 2A to 2B and/or the MST antenna 356 of FIG. 3). In the state 501 of FIG. 5A, the electronic device 101 may perform payment based on the communication function. The electronic device 101 may initiate execution of the communication function based on the authentication information obtained from the user. The authentication information may include data on the fingerprint obtained through the fingerprint sensor (e.g., the biometric authentication sensor 365 of FIG. 3) while displaying the visual object 512 or after displaying the visual object 512. The authentication information may include data (e.g., PIN) identified through a user input associated with the visual object 514. In the state 501 of FIG. 5A, based on initiating the execution of the communication function according to the authentication information, the electronic device 101 may switch to at least one of the states 502 and 503.

The electronic device 101 according to an embodiment may adjust a size and/or a direction of the visual object 140 based on switching from the state 501 to the state 502. In the state 501, the electronic device 101 may display a visual object 140 including text arranged along a width direction of the active area of the flexible display 130. After switching from the state 501 to the state 502, the electronic device 101 may rotate the visual object 140 along a height direction of the active area. After switching to the state 502, the electronic device 101 may at least temporarily cease to display another visual object other than the navigation bar 516 and the visual object 140 in the active area. The electronic device 101 may cease to display the other visual object until a moment when the function for payment is completed based on the NFC antenna and/or the MST antenna.

Referring to FIG. 5A, in the states 501 and 502 in which at least a portion of the flexible display 130 is inserted into the first housing 111, the electronic device 101 may identify an external object (e.g., the hand 120 of FIG. 1) that interferes with execution of a communication function based on the NFC antenna. In a case that the external object is identified at a position blocking or interfering with a wireless signal transmitted through the NFC antenna, the electronic device 101 may control an actuator (e.g., the actuator 330 of FIG. 3) to extract the at least a portion of the flexible display 130 inserted into the first housing 111. The embodiment is not limited thereto, and in a case that the wireless signal is successfully transmitted based on the MST antenna in the states 501 and 502, the electronic device 101 may refrain from controlling the actuator. Based on controlling the actuator, the electronic device 101 may switch from the states 501 and 502 of FIG. 5A to the state 503.

Referring to FIG. 5A, in the state 503 from which the portion of the flexible display 130 inserted into the first housing 111 is extracted, the electronic device 101 may move the visual object 140 to a position adjacent to the NFC antenna. The electronic device 101 switched from the states 501 and 502 displaying the visual object 140 at a position including a center of the active area to the state 503 may move the visual object 140 from the position to another position adjacent to an edge 130-2 adjacent to the NFC antenna among edges 130-1 and 130-2 of the active area. In the state 503, the other position (e.g., the position adjacent to the edge 130-2) in the active area in which the visual object 140 is displayed may at least partially overlap the NFC antenna from a perspective of viewing a front surface along a direction of the front surface of the electronic device 101. Based on the visual object 140 moved to the position adjacent to the edge 130-2, the electronic device 101 may guide the user to move the second housing 112 of the electronic device 101 including the edge 130-2 toward the external electronic device.

In the state 503 of FIG. 5A, the electronic device 101 may display a visual object 530 including text guiding the movement of the electronic device 101 in the active area. Within the visual object 530, the electronic device 101 may display the text (e.g., "put a rear surface of a mobile phone on a card reader") guiding the movement of the electronic device 101 toward the external electronic device, to the user. In the state 503, the electronic device 101 may reduce a probability that the wireless signal transmitted through the NFC antenna is blocked by using the visual objects 140 and 530 together with adjusting a position of the NFC antenna.

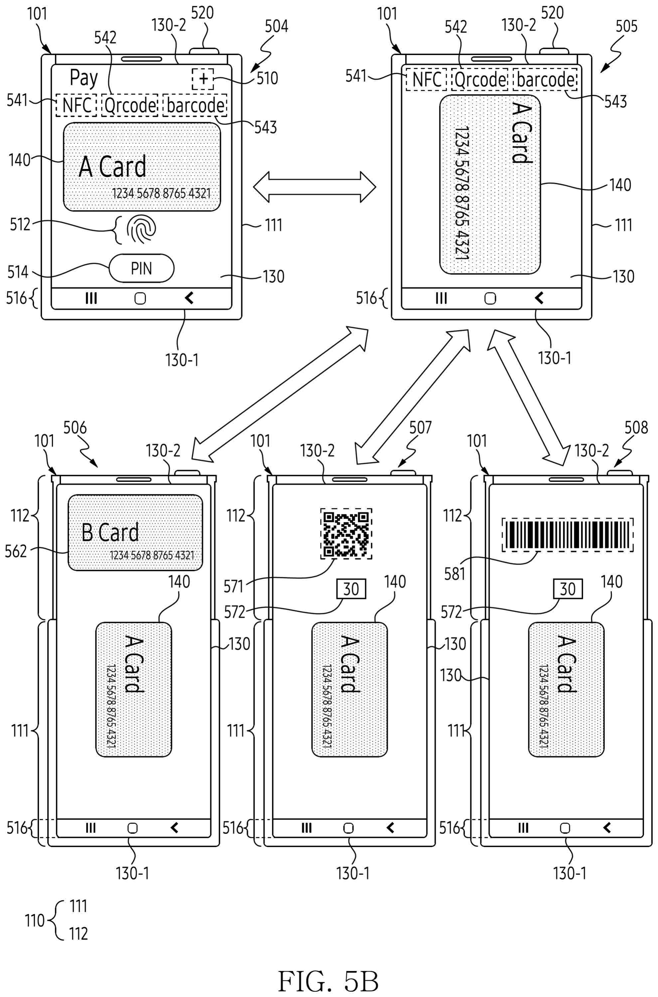

Referring to FIG. 5B, in the state 504 corresponding to the slide-in state, the electronic device 101 may display a screen for authenticating the user in the active area of the flexible display 130. The electronic device 101 may display the visual object 140 including an image representing information to be provided to the external electronic device for the payment. The electronic device 101 may display the visual object 512 for obtaining authentication information (e.g., the fingerprint). The electronic device 101 may display the visual object 514 for obtaining authentication information (e.g., the PIN). Based on the authentication information, the electronic device 101 may switch from the state 504 to the state 505.

Referring to FIG. 5B, in the state 505, the electronic device 101 according to an embodiment may wirelessly transmit a signal for payment using the MST antenna (e.g., the MST antenna 150 of FIG. 1 and/or the MST antenna 356 of FIG. 3). The signal may include information (e.g., the credit card) corresponding to the visual object 140. In the state 505, the electronic device 101 may display visual objects 541, 542, and 543 to receive an input for adding a means to be used to transmit the information, together with transmitting the information for the payment through the MST antenna. The visual object 541 may correspond to an option for transmitting information based on the NFC antenna (e.g., the NFC antenna 160 of FIG. 1 and/or the NFC antenna 354 of FIG. 3). The visual object 542 may correspond to an option for transmitting information based on a quick-response (QR) code. The visual object 543 may correspond to an option for transmitting information based on a barcode. The electronic device 101 receiving an input indicating selection of any one of the visual objects 541, 542, and 543 may switch to any one of the states 506, 507, and 508 corresponding to each of the visual objects 541, 542, and 543.

For example, the electronic device 101 receiving an input indicating the selection of the visual object 541 may switch from the state 505 to the state 506. The electronic device 101 may switch to the state 506 corresponding to the slide-out state based on at least one of the operations of FIG. 4. In the state 506, the electronic device 101 may wirelessly transmit a signal for payment using both the MST antenna and the NFC antenna. In the state 506, the electronic device 101 may display a visual object 562 corresponding to the NFC antenna and the visual object 140 based on the MST antenna in the active area of the flexible display 130 to display that both the MST antenna and NFC antenna are used. The visual object 562 may include an image (e.g., an image representing the credit card) corresponding to the information (e.g., information for performing payment based on the credit card) transmitted through the NFC antenna. The visual object 140 may include an image corresponding to the information transmitted through the MST antenna.

Referring to FIG. 5B, in the state 560 in which both NFC antenna and the MST antenna are used, the electronic device 101 may display the visual object 562 corresponding to the NFC antenna in a portion of the flexible display 130 adjacent to the NFC antenna, and the visual object 140 corresponding to the MST antenna in a portion of the flexible display 130 adjacent to the MST antenna.

For example, the electronic device 101 receiving an input indicating the selection of the visual object 542 may switch from the state 505 to the state 507. The electronic device 101 may switch to the state 507 in the slide-out state (or the intermediate state) by controlling the actuator. In the active area of the flexible display 130 extended by the control of the actuator, the electronic device 101 may display a QR code 571 visualizing the information for payment together with the visual object 140 associated with the MST antenna. In the state 507, the electronic device 101 may display the information for payment based on the QR code 571 while transmitting the information for payment through the MST antenna. In the state 507, the electronic device 101 may display the visual object 140 corresponding to the MST antenna on the portion of the flexible display 130 adjacent to the MST antenna, and display the QR code 571 on another portion different from the portion of the flexible display 130 in which the visual object 140 is displayed. For example, the QR code 571 may be displayed adjacent to the edge 130-2 of the flexible display 130 that may be easily scanned by a scanner. In the state 507, the electronic device 101 may display a visual object 572 including text for guiding duration in which the QR code 571 is displayed. Based on expiration of the duration, the electronic device 101 may cease to display the QR code 571.

For example, the electronic device 101 receiving an input indicating the selection of the visual object 543 may switch from the state 505 to the state 508. The electronic device 101 may switch to the state 508 in the slide-out state (or the intermediate state) by controlling the actuator. In the active area of the flexible display 130 extended by the control of the actuator, the electronic device 101 may display a barcode 581 visualizing the information for payment. In the state 508 switched from the state 505 transmitting the information for payment based on the MST antenna, the electronic device 101 may transmit the information for payment using both the MST antenna and the barcode 581. The electronic device 101 may display the visual object 140 associated with the information transmitted through the MST antenna on the flexible display 130 to display that the MST antenna is used. In the state 508, the visual object 140 may be displayed on the portion of the flexible display 130 adjacent to the MST antenna. In the state 508, the electronic device 101 may display the barcode 581 on another portion different from the portion of the flexible display 130 in which the visual object 140 is displayed. The barcode 581 may be disposed at a position (e.g., the position adjacent to the edge 130-2 of the flexible display 130) that is likely to be adjacent to the scanner.

For example, the barcode 581 displayed in the state 508 may one-dimensionally indicate the information for payment. Similar to the state 507, the electronic device 101 may display a visual object 572 including text for guiding duration in which the barcode 581 is displayed. Based on expiration of the duration, the electronic device 101 may cease to display the barcode 581. Based on the expiration of the duration, the electronic device 101 may switch to the slide-in state by controlling the actuator.

Referring to the states 507 and 508 of FIG. 5B, the QR code 571 and/or the barcode 581 may be displayed adjacent to the edge 130-2 with a high probability of being accessed by a QR code reader and/or a barcode reader among the edges 130-1 and 130-2 of the flexible display 130. For example, since the user of the electronic device 101 is likely to grip a lower end (e.g., a portion of the electronic device 101 corresponding to the first housing 111 and/or the edge 130-1) of the flexible display 130, an upper end (e.g., a portion of the electronic device 101 corresponding to the second housing 112 and/or the edge 130-2) of the flexible display 130 may face the QR code reader and/or the barcode reader in the states 507 and 508 in which the QR code 571 and/or the barcode 581 are displayed. In the above example, the electronic device 101 may enable the QR code 571 and/or the barcode 581 to be scanned by the QR code reader and/or the barcode reader without additional user action, by displaying the QR code 571 and/or the barcode 581 adjacent to the upper end of the flexible display 130.

Referring to FIG. 5B, the information for payment may be transmitted not only by the NFC antenna (or the MST antenna) but also by the QR code 571 and/or the barcode 581 visualized through the flexible display 130. The electronic device 101 according to an embodiment may identify an input for selecting one or more means (e.g., the NFC antenna, the MST antenna, the QR code 571, and/or the barcode 581) to be used for payment based on the visual objects 541, 542, and 543. In response to an input for selecting a plurality of the means, the electronic device 101 may extract at least a portion of the flexible display 130 and display visual objects corresponding to each of the means in the active area extended by the extraction of the flexible display 130 (e.g., the states 506, 507, and 508). For example, the electronic device 101 may indicate that the information for payment is provided using all of the means based on the visual objects.

Referring to FIG. 5B, an embodiment of the electronic device 101 in which, in the state 505 of transmitting the information for payment based on the MST antenna, the electronic device 101 switches to another state (e.g., the states 506, 507, and 508) of additionally transmitting the information for payment using any one of the NFC antenna, the QR code 571, and/or the barcode 581 together with the MST antenna, based on an input received in the state 505, has been described, but the embodiment is not limited thereto. For example, the electronic device 101 may transmit the information for payment by simultaneously using at least two means among the MST antenna, the NFC antenna, the QR code 571, or the barcode 581. By simultaneously using the at least two means, the electronic device 101 may support dual payment based on different payment means.

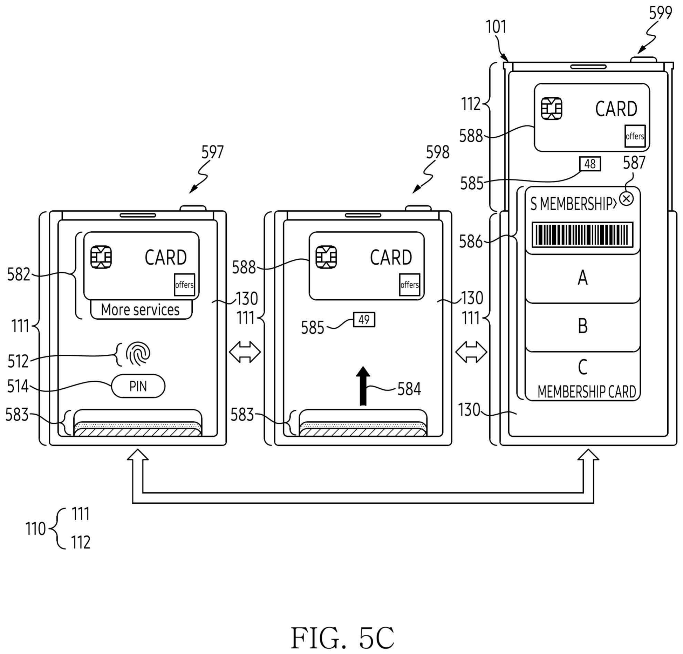

Referring to FIG. 5C, different states 597, 598, and 599 of the electronic device 101 for transmitting information for payment are illustrated. In the state 597 corresponding to the slide-in state, the electronic device 101 may display a screen including the visual objects 512 and 514 for authenticating the user in the active area of the flexible display 130. In the state 597, the electronic device 101 may display lists 582 and 583 for selecting information to be provided to the external electronic device for payment. The lists 582 and 583 are areas formed in the active area, and may include visual objects (e.g., an image representing a credit card such as the visual object 140 of FIG. 1) representing each of means (e.g., the credit card, a membership card, a QR code, and/or a barcode) pre-registered for payment in the electronic device 101.

Referring to FIG. 5C, based on authentication of the user, the electronic device 101 may switch from the state 597 to the state 598. In the state 598, the electronic device 101 may display a visual object 588 indicating that the information for payment is transmitted through the NFC antenna. The visual object 588 may include the image representing the credit card pre-registered in the electronic device 101. The electronic device 101 may display a visual object 585 including text for guiding duration in which the information is transmitted through the NFC antenna.

In the state 598 of FIG. 5C, the electronic device 101 may display, in the active area of the flexible display 130, the list 583 for changing the information for payment and/or the means. In the state 598, electronic device 101 may receive an input for selecting the list 583. For example, the input may include a swipe gesture performed on the flexible display 130 along a direction 584. Based on the swipe gesture, the electronic device 101 may switch from the state 598 to the state 599.

Referring to FIG. 5C, in the state 599, the electronic device 101 may display, in the flexible display 130, a list 586 for selecting a payment means to be additionally provided by the electronic device 101, together with the visual object 588 notifying that the information for payment is transmitted through the NFC antenna. In the list 586, the electronic device 101 may display visual objects representing other information and/or means different from information corresponding to the visual object 588. The exemplary state 599 of the electronic device 101 displaying the list 586 having a shape in which a plurality of visual objects are stacked is illustrated, but the embodiment is not limited thereto.

In the state 599 of FIG. 5C, the electronic device 101 may receive an input for scrolling the visual objects displayed in the list 586. The input may include a drag gesture and/or a swipe gesture on the flexible display 130 in which the list 586 is displayed. In the state 599 of displaying the list 586 having the shape in which the plurality of visual objects are stacked, the electronic device 101 may change an order in which the plurality of visual objects are stacked in the list 586 based on the input. Based on the changed order, the electronic device 101 may identify information and/or a means corresponding to a visual object stacked on the top in the list 586. Based on the information and/or the means, the electronic device 101 may execute a function for payment.

Referring to FIG. 5C, in the state 599, the electronic device 101 may display all barcodes identified based on the visual object 588 for notifying that the information for payment is transmitted through the NFC antenna and the list 586, in the active area of the flexible display 130. In the state 599, the electronic device 101 may transmit the information for payment by using both the NFC antenna and the flexible display 130. In the state 599, the electronic device 101 may display a visual object 587 in a form of an icon and/or a button to cease to display the barcode, in the active area.

As described above, the electronic device 101 according to an embodiment may change a position of the NFC antenna in the electronic device 101 in order to improve quality of a wireless signal transmitted based on the NFC antenna. The quality (or communication performance) of the wireless signal may be evaluated or measured by an indicator such as BER, a signal to noise ratio (SNR), and/or a signal-to-interference-plus-noise ratio (SINR). Together with changing the position of the NFC antenna, the electronic device 101 may display a screen (e.g., the screen displayed in the active area in the state 503) guiding action of the user moving the NFC antenna.

The electronic device 101 according to an embodiment may analyze data of one or more sensors (e.g., the one or more sensors 360 of FIG. 3) to change the position of the NFC antenna based on the control of the actuator. Based on the data of the one or more sensors, the electronic device may identify an external object between the external electronic device and the NFC antenna. The electronic device may control the actuator to extract the portion of the flexible display 130 from the first housing 111 based on identifying the external object. Based on controlling the actuator, the electronic device 101 may change the position of the NFC antenna.

Hereinafter, an operation of the electronic device 101 identifying the external object based on the data of the one or more sensors will be described with reference to FIGS. 6, 7A to 7C.

FIG. 6 illustrates an example of a flowchart of an electronic device according to an embodiment. The electronic device 101 of FIGS. 1 to 3 and/or the processor 310 of the electronic device 101 of FIG. 3 may perform operations described with reference to FIG. 6. At least one of the operations of the electronic device described with reference to FIG. 6 may be associated with at least one (e.g., the operation 430 of FIG. 4) of the operations of FIG. 4.

Referring to FIG. 6, in operation 610, a processor of the electronic device according to an embodiment may identify an event for executing a communication function based on an NFC antenna. A flexible display of the operation 610 may include the flexible display 130 of FIGS. 1 to 5C. The NFC antenna of the operation 610 may include the NFC antenna 160 of FIGS. 1, 2A, and 2B. The operation 610 of FIG. 6 performed by the processor may include at least one of the operations 410 and 420 of FIG. 4. For example, the event of the operation 610 may occur based on authenticating a user of the electronic device in a state (e.g., the states 501 and 502 of FIG. 5A) of providing a screen associated with payment. For example, based on the authentication information identified through one or more sensors, the processor may determine whether to execute the communication function and/or whether to display a visual object (e.g., the visual object 140 of FIGS. 1 to 5B) associated with the communication function. The processor may transmit a wireless signal to an external electronic device by controlling an antenna of the electronic device including the NFC antenna while displaying the visual object in an active area. The processor may identify the event of the operation 610 in a state in which a portion of the flexible display is inserted into a housing of the electronic device, such as a slide-in state.

Referring to FIG. 6, in operation 620, the processor of the electronic device according to an embodiment may identify an external object (e.g., a hand) adjacent to the NFC antenna using data from a grip sensor. The grip sensor of the operation 620 may include the grip sensor 361 of FIG. 3. The processor may identify the external object in contact with the NFC antenna and/or the housing of the electronic device, such as the hand 120 of FIG. 1, based on the data of the grip sensor. Based on identifying the external object, the processor may identify whether the external object has a shape and/or a posture that interferes with or blocks exchange of a wireless signal between the NFC antenna and the external electronic device, as described later with reference to FIGS. 7A to 7B. In a state in which the external object adjacent to the NFC antenna is identified (620-YES), the processor may perform operation 650. Before the external object adjacent to the NFC antenna is identified or in a state in which the external object adjacent to the NFC antenna is not identified (620-NO), the processor may determine whether to control an actuator by further performing operations 630 and 640.

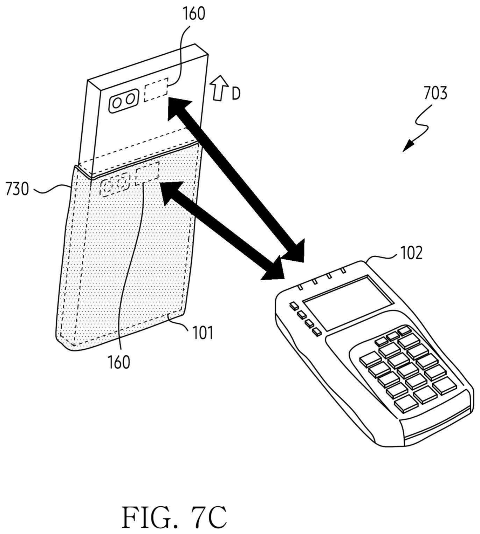

Referring to FIG. 6, in the operation 630, the processor of the electronic device according to an embodiment may identify an external object (e.g., a case) covering the NFC antenna based on data of a Hall sensor. The Hall sensor of FIG. 6 may include the Hall sensor 362 of FIG. 3. Based on the data of the Hall sensor, the processor may identify the external object covering a portion (e.g., the edge 112-2 of the second housing 112 of FIG. 1) of the electronic device in which the NFC antenna is disposed. The processor may identify the external object positioned on a signal path of a wireless signal transmitted from the NFC antenna based on the data of the Hall sensor, as described later with reference to FIG. 7C. Although an embodiment of identifying the external object using the Hall sensor is described, the embodiment is not limited thereto. For example, the processor may identify the external object of the operation 620 using a proximity sensor. In a state in which the external object covering the NFC antenna is identified based on the data of the Hall sensor (630-YES), the processor may perform the operation 650. Before the external object of the operation 620 is identified or in a state in which the external object of the operation 620 is not identified (630-NO), the processor may determine whether to control the actuator by further performing the operation 640.

Referring to FIG. 6, in the operation 640, the processor of the electronic device according to an embodiment may identify whether intensity of a wireless signal received through the NFC antenna is less than preset intensity. The processor may output a wireless signal through the NFC antenna based on the event of the operation 610. The processor may receive a wireless signal from the external electronic device that has receiving the wireless signal outputted from the NFC antenna through the NFC antenna as a response to the wireless signal. The processor may identify the external electronic device based on receiving the wireless signal through the NFC antenna. The processor may identify the external electronic device based on receiving a wireless signal exceeding the preset intensity of the operation 640 through the NFC antenna. In a case in which a wireless signal less than the preset intensity is received through the NFC antenna, the processor may not be able to identify the external electronic device. For example, in a case in which the wireless signal less than the preset intensity is received through the NFC antenna, the processor cannot communicate with the external electronic device through the NFC antenna. In a state in which a wireless signal having intensity greater than or equal to the preset intensity is received through the NFC antenna (640-NO), the processor may perform operation 660. In a state in which no wireless signal is received through the NFC antenna, or the wireless signal less than the preset intensity is received through the NFC antenna (640-NO), the processor may perform the operation 650. For example, after identifying the event of the operation 610, the processor may perform the operation 650 in a case in which the wireless signal is not received for preset duration, or the communication function (e.g., the communication function executed for payment) executed based on the event is not completed for the preset duration.

Referring to FIG. 6, in the operation 650, the processor of the electronic device according to an embodiment may extract the portion of the flexible display inserted into the housing by controlling the actuator. Referring to FIG. 6, the processor may perform the operation 650 when at least one of external objects of each of the operations 620 and 630 were identified, or according to whether to receive the wireless signal in the operation 640. Referring to FIG. 6, it is illustrated that the processor sequentially performs the operations 620, 630, and 640, but the embodiment is not limited thereto. For example, the processor may perform operations the 620, 630, and 640 in an order different from that of FIG. 6. For example, the processor may perform at least two operations of the operations 620, 630, and 640 substantially simultaneously.

Referring to FIG. 6, the actuator of the operation 650 may include the actuator 330 of FIG. 3. The flexible display of operation 650 may include the flexible display 130 of FIGS. 1 to 5C. The housing of the operation 650 may include the housing 110 and/or the first housing 111 of FIG. 1. For example, in a case that the processor controls the actuator based on the operation 650, the flexible display 130 and/or the second housing 112 of FIG. 1 may be extracted from the first housing 111. Since the processor controls the actuator based on the operation 650, a position of the NFC antenna in the electronic device may be changed. For example, the NFC antenna may be moved in a direction away from the external objects of the operations 620 and 630. For example, based on the movement of the NFC antenna, the intensity of the wireless signal received through the NFC antenna may increase.

The processor of the electronic device according to an embodiment may change the screen displayed through the active area of the flexible display while controlling the actuator based on the operation 650. For example, while the active area is extended by the actuator, the processor may move the visual object displayed in the active area to an area of the active area adjacent to the NFC antenna. In the active area extended by the portion of the flexible display extracted from the housing, the processor may display the visual object in the area corresponding to an edge (e.g., the edge 130-2 of FIG. 1) of the active area adjacent to the NFC antenna. From a perspective of viewing the active area in a direction of the active area, the area in which the visual object is displayed may at least partially overlap the NFC antenna. Using a position of the visual object displayed based on the operation 640, the processor may guide the user to move a portion of the electronic device in which the NFC antenna is disposed toward the external electronic device corresponding to the NFC antenna.

Referring to FIG. 6, a state in which the portion of the flexible display is extracted based on the operation 650 may correspond to another state (e.g., a slide-out state and/or an intermediate state) different from a state (e.g., the slide-in state) at a moment of identifying the event of the operation 610. In a state in which the portion of the flexible display is extracted, the processor may execute the communication function of the operation 610. By using the NFC antenna having a position adjusted based on the operation 650, the electronic device may improve quality of the wireless signal exchanged between the NFC antenna and the external electronic device.

Referring to FIG. 6, in the operation 660, the processor of the electronic device according to an embodiment may execute the communication function based on the NFC antenna, independently of controlling the actuator. Referring to FIG. 6, in a case that the external objects of operations 620 and 630 were not identified, the wireless signal was received from the external electronic device based on the operation 640, or the external electronic device was identified, the processor may execute the communication function based on the operation 660. In a case that the processor executes the communication function based on the operation 660, since the operation 650 is not performed, a state of the electronic device and/or the flexible display may be maintained in the state (e.g., a state corresponding to the slide-in state) at the moment of identifying the event of the operation 610.

As described above, the processor of the electronic device according to an embodiment may identify a factor (e.g., the external objects of the operations 620 and 630) that interferes with wireless communication by the NFC antenna based on data of the one or more sensors of the electronic device. Based on identifying the factor, the processor may determine whether to control the actuator to move the NFC antenna. Based on the movement of the NFC antenna, the processor may improve quality of the wireless communication despite the factor.

Referring to the operations 630 and 640 of FIG. 6, the processor may identify an external object between the NFC antenna and the edge of the electronic device adjacent to the external electronic device. Hereinafter, different states of the electronic device identifying the external object are exemplarily described with reference to FIGS. 7A to 7C.

FIGS. 7A to 7C illustrate different states 701, 702, and 703 of an electronic device 101 controlling an actuator based on an external object. The electronic device 101 of FIGS. 1 to 3 and/or the processor 310 of the electronic device 101 of FIG. 3 may perform an operation described with reference to FIGS. 7A to 7C. The operation of the electronic device 101 described with reference to FIGS. 7A to 7C may be associated with at least one (e.g., the operation 430 of FIG. 4) of the operations of FIG. 4 and/or at least one of the operations of FIG. 6.

Referring to FIG. 7A, the exemplary state 701 in which the electronic device 101 is moved toward an external electronic device 102 by a hand 120 holding the electronic device 101 to surround a front surface of the electronic device 101 is illustrated. In the state 701, an external object such as the hand 120 may not be positioned between an NFC antenna 160 and the external electronic device 102. The electronic device 101 according to an embodiment may identify the external object (e.g., the hand 120) that interferes with wireless communication between the NFC antenna 160 and the external electronic device 102 based on data from one or more sensors (e.g., the grip sensor 361 of FIG. 3). As illustrated in FIG. 7A, in a case that the hand 120 is spaced apart from an external space between the electronic device 101 and the external electronic device 102, or in a case that a palm of the hand 120 holding the electronic device 101 is adjacent to the front surface of the electronic device 101, the electronic device 101 may not control the actuator. For example, a state of the electronic device 101 may be maintained in a slide-in state. Although the grip sensor is illustrated, the electronic device 101 may identify a posture and/or a shape of the hand 120 holding the electronic device 101 by using a touch sensor, a gyro sensor, an acceleration sensor, and/or the grip sensor.

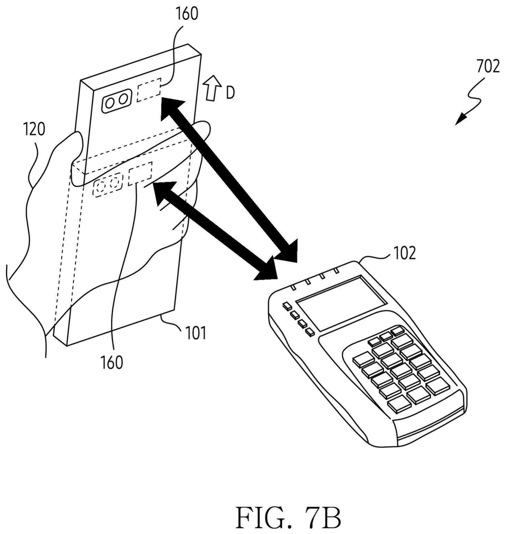

Referring to FIG. 7B, the exemplary state 702 in which the electronic device 101 is moved toward the external electronic device 102 by the hand 120 holding the electronic device 101 to surround a rear surface of the electronic device 101 is illustrated. In the state 702, the external object including the hand 120 may be positioned between the NFC antenna 160 in the electronic device 101 in the slide-in state and the external electronic device 102. The electronic device 101 may identify the external object (e.g., the hand 120) that interferes with wireless communication between the NFC antenna 160 and the external electronic device 102 based on data from the one or more sensors (e.g., the grip sensor 361 of FIG. 3 and/or the touch sensor, the gyro sensor, the acceleration sensor).

As illustrated in FIG. 7B, in a case that the hand 120 is positioned between the electronic device 101 and the external electronic device 102, or the palm of the hand 120 holding the electronic device 101 faces the rear surface of the electronic device 101, the electronic device 101 may change the state of the electronic device 101 by controlling the actuator. For example, in a case that the hand 120 holding the electronic device 101 is identified according to a shape illustrated in FIG. 7B in the slide-in state, the electronic device 101 may switch to another state (e.g., a slide-out state and/or an intermediate state) different from the slide-in state by controlling the actuator. For example, the electronic device 101 may switch to the slide-out state to maximize a distance between the NFC antenna 160 and the hand 120. An embodiment is not limited thereto, and the electronic device 101 may switch to the intermediate state by controlling the actuator up to a timing when the distance between the NFC antenna 160 and the hand 120 exceeds a preset distance.

The external object identified by the electronic device 101 according to an embodiment based on the data of the one or more sensors is not limited to the hand 120 of FIGS. 7A to 7B. Referring to FIG. 7C, the exemplary state 703 of the electronic device 101 in which a phone case 730 surrounding the rear surface of the electronic device 101 in the slide-in state is combined is illustrated. In the state 703, the phone case 730 may be positioned between the electronic device 101 in the slide-in state and the external electronic device 102. The electronic device 101 may identify an external object (e.g., the phone case 730) on a path of the wireless signal propagating between the NFC antenna 160 and the external electronic device 102 based on the data from the one or more sensors (e.g., the Hall sensor 362 of FIG. 3). The electronic device 101 identifying the phone case 730 may control the actuator so that the NFC antenna 160 moves out of the phone case 730. As the NFC antenna 160 is moved out of the phone case 730 by the actuator, the NFC antenna 160 may be moved to a position capable of transmitting the wireless signal directly toward the external electronic device 102. Although the electronic device 101 is described to identify the phone case 730 using the Hall sensor, the embodiment is not limited thereto. For example, the electronic device 101 may identify the phone case 730 attached to the rear surface of the electronic device 101 using a proximity sensor.

As described above, the electronic device 101 according to an embodiment may initiate controlling the actuator based on identifying an external object (e.g., the hand 120 and/or the phone case 730) positioned between the NFC antenna 160 and the external electronic device 102 corresponding to the NFC antenna 160 based on the data of the one or more sensors. Referring to the states 702 and 703 of FIGS. 7B to 7C, the NFC antenna 160 may be moved along a direction D based on the control of the actuator. Referring to the state 702 of FIG. 7B, the NFC antenna 160 moving along the direction D may be moved to a position capable of transmitting the wireless signal directly toward the external electronic device 102 independently of the hand 120. Referring to the state 703 of FIG. 7C, the NFC antenna 160 moving along the direction D may be moved to the position capable of transmitting the wireless signal directly toward the external electronic device 102 independently of the phone case 730. For example, the electronic device 101 may switch to the slide-out state to maximize a distance between the NFC antenna 160 and the phone case 730. The embodiment is not limited thereto, and the electronic device 101 may switch to the intermediate state by controlling the actuator up to a timing when the distance between the NFC antenna 160 and the phone case 730 exceeds a preset distance. The preset distance may be heuristically determined according to quality of the wireless signal transmitted based on the NFC antenna 160.

Although an embodiment in which the electronic device 101 determines whether to control the actuator based on an external object (e.g., the hand 120 and/or the phone case 730) has been described, the electronic device 101 may determine whether to control the actuator based on another factor. For example, the electronic device 101 may control the actuator based on a posture and/or a direction of the electronic device 101 with respect to the external electronic device 102, which is identified based on data from the acceleration sensor and/or the gyro sensor. For example, the electronic device 101 may control the actuator based on the posture and/or the direction to adjust a distance and/or an angle of the NFC antenna 160 with respect to the external electronic device 102. The electronic device 101 may control the actuator to improve the quality of the wireless communication between the NFC antenna 160 and the external electronic device 102.

The electronic device 101 according to an embodiment may identify a position of the external electronic device 102 with respect to the electronic device 101 by using a wireless signal in ultra-wideband (UWB). Hereinafter, an operation of the electronic device 101 identifying the position of the external electronic device 102 with respect to the electronic device 101 will be described with reference to FIGS. 8, 9A to 9C.

FIG. 8 illustrates an example of a flowchart of an electronic device according to an embodiment. The electronic device 101 of FIGS. 1 to 3 and/or the processor 310 of the electronic device 101 of FIG. 3 may perform operations described with reference to FIG. 8. At least one of the operations of the electronic device described with reference to FIG. 8 may be associated with at least one of the operations of FIG. 4 and/or FIG. 6.

Referring to FIG. 8, in operation 810, a processor of the electronic device according to an embodiment may identify an event for executing a communication function based on an NFC antenna in a state in which a portion of a flexible display is inserted into a housing of the electronic device. The flexible display of the operation 810 may include the flexible display 130 of FIGS. 1 to 3. The housing of the operation 810 may include the housing 110 and/or the first housing 111 of FIG. 1. The NFC antenna of the operation 810 may include the NFC antenna 160 of FIGS. 1, 2A to 2B and/or the NFC antenna 354 of FIG. 3. The operation 810 of FIG. 8 performed by the processor may include at least one of the operation 410 of FIG. 4 and the operation 610 of FIG. 6.

Referring to FIG. 8, in operation 820, the processor of the electronic device according to an embodiment may identify a position of an external electronic device corresponding to the NFC antenna, by controlling an UWB antenna and/or a camera. The UWB antenna of the operation 820 may include the UWB antenna 358 of FIG. 3. The external electronic device of the operation 820 may include a target device (or a counterpart device) with respect to a wireless signal transmitted through the NFC antenna.

In an embodiment, the processor may identify a relative position of the external electronic device with respect to the electronic device by using a plurality of UWB antennas. For example, the processor may identify a difference between timings when the wireless signal of the external electronic device is transmitted to each of the plurality of UWB antennas of the electronic device. Based on the difference, the processor may obtain an angle of arrival (AoA) for the plurality of UWB antennas. The processor may determine an azimuth angle of the external electronic device by combining the AoA and an azimuth angle of the processor. The processor may identify a distance between the electronic device and the external electronic device based on intensity of the wireless signal received through the plurality of UWB antennas. In a state of identifying the position of the external electronic device using the plurality of UWB antennas, the processor may display a visual object indicating the position of the external electronic device on a display. The visual object may include a figure (e.g., an arrow) representing a direction of the external electronic device with respect to the electronic device.

In an embodiment, the processor may identify the position of the external electronic device with respect to the electronic device using a camera (e.g., the image sensor 363 of FIG. 3). The processor may identify, from an image and/or a video obtained from the camera, the position of the external electronic device captured by the camera.

Referring to FIG. 8, in operation 830, the processor of the electronic device according to an embodiment may identify an external object adjacent to the NFC antenna and/or the electronic device. The processor may identify the external object of the operation 830 by using one or more sensors (e.g., the one or more sensors 360 of FIG. 3). The processor may perform the operation 830 of FIG. 8 based on the operation 430 of FIG. 4 and/or the operations of FIG. 6. In a state in which the external object of the operation 830 is identified (830-YES), the processor may perform operation 840. Before the external object of the operation 830 is identified, or in a state in which the external object of the operation 830 is not identified (830-NO), the processor may perform operation 850.

Referring to FIG. 8, in the operation 840, the processor of the electronic device according to an embodiment may extract the portion of the flexible display from the housing of the electronic device by controlling an actuator. The actuator of the operation 840 may include the actuator 330 of FIG. 3. Based on the operation 840, the processor may switch a state of the electronic device to another state (e.g., a slide-out state and/or an intermediate state) that is distinguished from a state (e.g., a slide-in state) in which the event of the operation 810 is identified.

In an embodiment, controlling the actuator based on the operation 840 may be performed based on the position of the external electronic device identified by the operation 820. For example, the processor may identify a first direction of the external electronic device with respect to the electronic device based on a signal in UWB received through the UWB antenna. The processor may control the actuator based on a second direction of the NFC antenna and the first direction. The second direction of the NFC antenna may correspond to a direction of an edge 112-2 of the electronic device 101 in which the NFC antenna 160 of FIG. 1 is disposed. For example, the processor may control the actuator in a case that a difference between the second direction and the first direction is expected to decrease based on the extraction of the portion of the flexible display.

Referring to FIG. 8, in the operation 850, the processor of the electronic device according to an embodiment may display a screen associated with the communication function based on the position of the external electronic device. In a state in which the portion of the flexible display is extracted from the housing based on the operation 840, a visual object (e.g., the visual object 140 of FIGS. 1 to 5B) associated with the communication function may be displayed in a portion of an active area adjacent to the NFC antenna. In an embodiment, the processor may further display, on the screen, a visual object (or an indicator) indicating the position of the external electronic device in the operation 820.

Hereinafter, different states of the electronic device identifying the external electronic device based on the UWB antenna and/or the camera will be exemplarily described with reference to FIGS. 9A to 9C.

FIGS. 9A to 9C illustrate different states 901, 902, 903, and 904 of an electronic device 101 processing a wireless signal in UWB. The electronic device 101 of FIGS. 1 to 3 and/or the processor 310 of the electronic device 101 of FIG. 3 may perform an operation described with reference to FIGS. 9A to 9C. The operation of the electronic device 101 described with reference to FIGS. 9A to 9C may be associated with at least one of the operations of FIGS. 4, 6 and/or 8.

Referring to FIGS. 9A to 9C, an embodiment of the electronic device 101 including three UWB antennas 911, 912, and 913 is illustrated. The UWB antennas 911, 912, and 913 may be an example of the plurality of UWB antennas 358 of FIG. 3. The number of UWB antennas included in the electronic device 101 is not limited to an embodiment illustrated in FIGS. 9A to 9C. Referring to FIGS. 9A to 9C, the UWB antennas 911, 912, and 913 included in the electronic device 101 may be disposed in a form of an "L" character along two axes (an x axis and a y axis) perpendicular to each other from a perspective of viewing a rear surface along a direction of the rear surface of the electronic device 101. The x-axis of FIG. 9A may correspond to a width direction of a flexible display 130, and the y-axis may correspond to a height direction of the flexible display 130.

The electronic device 101 according to an embodiment may calculate an angle of arrival of a wireless signal in the UWB propagated from an external electronic device based on the UWB antennas 911, 912, and 913 disposed at different positions. For example, based on a distance D between the two UWB antennas 911 and 912 separated along the x-axis, the processor may obtain and/or calculate the angle of arrival $\theta$ of the wireless signal based on Equations 1 to 3.

【Equation 1】

$$D = \Delta d \cdot cos\theta$$

【Equation 2】

$$\Delta\varphi = \frac{2\pi}{\lambda} \cdot \Delta d$$

【Equation 3】

$$AOA(\theta) = cos^{-1}\frac{\Delta\varphi}{2\pi D/\lambda}$$

The $\Delta\varphi$ of Equations 1 to 3 may indicate a phase difference of a wireless signal received from each of the two UWB antennas 911 and 912. The $\Delta d$ of Equations 1 to 3 may indicate a difference in distances between the two UWB antennas 911 and 912 from a source (e.g., the external electronic device) that transmits the wireless signal in the UWB. The $\lambda$ of Equations 1 to 3 may indicate a wavelength of the wireless signal. The processor may identify a position of the external electronic device, based on the angle of arrival $\theta$ of the wireless signal and a magnetic north direction of the electronic device identified through a geomagnetic sensor.

The processor according to an embodiment may identify an angle of arrival $\theta$ with respect to the x-axis based on the wireless signal received through the two UWB antennas 911 and 912 disposed along the x-axis. Similarly, the processor may identify an angle of arrival $\phi$ with respect to the y axis based on the wireless signals received through the two UWB antennas 912 and 913 disposed along the y axis. Based on receiving the wireless signal in the UWB through the two UWB antennas 912 and 913, the processor may identify the angle of arrival $\phi$ with respect to the y-axis using Equations 1 to 3.

Referring to FIG. 9A, the exemplary state 901 in which the electronic device 101 communicates with an external electronic device 920 using the UWB antennas 911, 912, and 913 is illustrated. The electronic device 101 may distinguish parameters for controlling the UWB antennas 911, 912, and 913 according to different states (e.g., a slide-in state and/or a slide-out state) of the electronic device 101. The parameters may include a calibration value for correcting a phase difference of arrival (PDoA), a transmission power value, and a transmission power lookup table according to a state of the electronic device 101. Based on the parameters, the electronic device 101 may adjust transmission power of a wireless signal in the UWB transmitted through at least one of the UWB antennas 911, 912, and 913.

Referring to the state 901 of FIG. 9A, the electronic device 101 according to an embodiment may identify a first direction of the external electronic device 920 with respect to the electronic device 101 based on receiving the wireless signal in the UWB transmitted from the external electronic device 920 through the UWB antennas 911, 912, and 913. The electronic device 101 may control an actuator using a second direction associated with an NFC antenna 160 and the first direction, based on identifying the first direction. For example, the electronic device 101 may control the actuator to reduce a difference between the second direction of the NFC antenna 160 and the first direction.

Referring to FIG. 9A, the exemplary state 901 of the electronic device 101 receiving a wireless signal in the UWB from a vehicle including a bus is illustrated. In a case that the electronic device 101 receives wireless signals in the UWB from a plurality of vehicles, the electronic device 101 may control the actuator based on a wireless signal with respect to a specific vehicle set by a user of the electronic device 101. For example, the electronic device 101 may identify a direction of the vehicle with respect to the electronic device 101 in response to receiving the wireless signal in the UWB propagated from the vehicle pre-registered by the user. The electronic device 101 may enable a portion of the electronic device 101 in which the NFC antenna 160 is disposed to face the vehicle by controlling the actuator based on identifying the direction of the vehicle.

In an embodiment, in a case that the vehicle pre-registered by the user is identified based on the wireless signal in the UWB, the electronic device 101 may execute a function for paying a traffic fee with respect to the vehicle. Based on executing the function, the electronic device 101 may control the actuator by performing the above-described operation with reference to FIGS. 1 to 8. In a case that the function for paying the traffic fee is completed, the electronic device 101 may output feedback for notifying completion of the payment based on the function. The feedback may include at least one of visual feedback based on the flexible display 130 of the electronic device 101, auditory feedback through a speaker, and/or tactile feedback based on a haptic actuator.

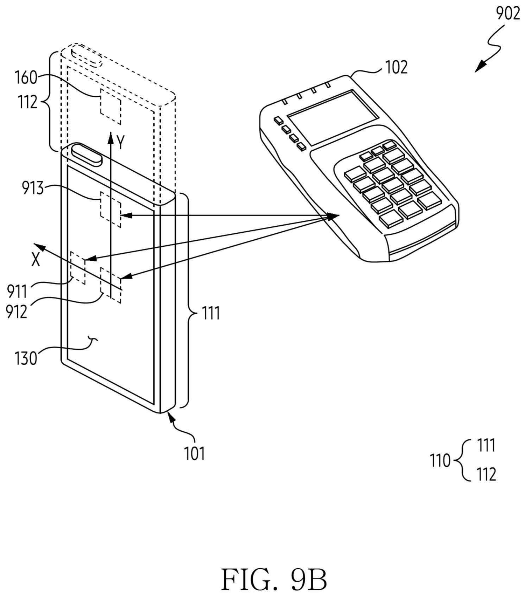

Referring to FIG. 9B, the state 902 in which the electronic device 101 communicates with an external electronic device 102 using the UWB antennas 911, 912, and 913 is illustrated. The external electronic device 102 may correspond to POS. The electronic device 101 may identify the external electronic device 102 using the UWB antennas 911, 912, and 913 in response to an input for executing a function associated with payment. In a case that the external electronic device 102 was identified based on an MST antenna (e.g., the MST antenna 150 of FIGS. 1, 2A to 2B and/or the MST antenna 356 of FIG. 3) or information is transmitted using only the MST antenna, or communication with the external electronic device 102 is possible, the electronic device 101 may refrain from controlling the actuator to activate the NFC antenna 160 or to change a state of the electronic device 101.

In a case that the electronic device 101 communicates with the external electronic device 102 based on the NFC antenna 160, the electronic device 101 may change a position of the NFC antenna 160 based on a direction of the external electronic device 102 with respect to the electronic device 101 identified through the UWB antennas 911, 912, and 913. For example, the external electronic device 102 including a communication module for the UWB, such as a UWB dongle, may repeatedly (or periodically) transmit a wireless signal in the UWB. Based on receiving the wireless signal in the UWB through the UWB antennas 911, 912, and 913, the electronic device 101 may identify the direction of the external electronic device 102. Based on the direction, the electronic device 101 may control the actuator to improve NFC communication performance between the NFC antenna 160 and the external electronic device 102. Referring to the state 902 of FIG. 9B, as the actuator is controlled, a second housing 112 including the NFC antenna 160 may be extracted from a first housing 111. Based on the extraction of the second housing 112, the NFC antenna 160 may move to a position close to the external electronic device 102 or to a position capable of directly transmitting the wireless signal to the external electronic device 102.

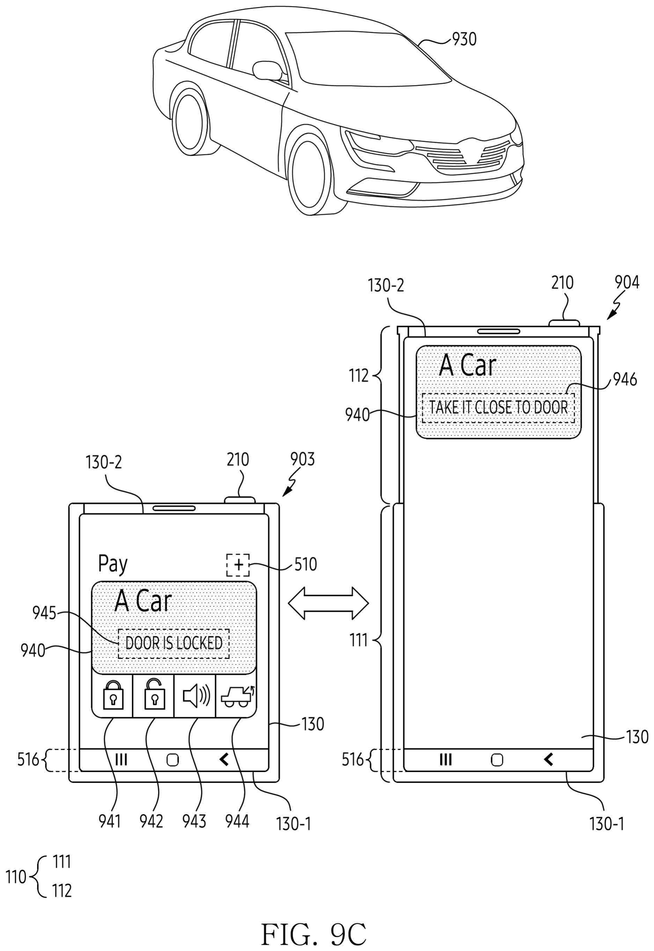

The information transmitted by the electronic device 101 using the NFC antenna 160 according to an embodiment is not limited to the information for payment described with reference to the states 901 and 902 of FIGS. 9A to 9B. The electronic device 101 may transmit a wireless signal for remotely controlling the external electronic device, such as a smart key, using the NFC antenna 160. Referring to FIG. 9C, the exemplary states 903 and 904 of the electronic device 101 controlling the NFC antenna to remotely control a vehicle 930 are illustrated.

Referring to FIG. 9C, in the state 903 corresponding to the slide-in state, the electronic device 101 may display a screen for remotely controlling the vehicle 930. In the state 903, the screen in which the electronic device 101 displays in an active area of the flexible display 130 may correspond to the screen displayed in the active area in the state 501 of FIG. 5A. The electronic device 101 may display a visual object 940 corresponding to the vehicle 930 in a first area of the active area.

Referring to FIG. 9C, the visual object 940 may include an image having a shape of a card key with respect to the vehicle 930. The electronic device 101 may display, together with the visual object 940, a visual object 945 including text (e.g., "The door is locked.") indicating a state of the vehicle 930 corresponding to the visual object 940. The electronic device 101 may display, together with the visual object 940, visual objects 941, 942, 943, and 944 having a shape of a button for controlling the state of the vehicle 930. For example, the visual object 941 including an image and/or an icon representing a closed lock may correspond to a function to lock at least one door of the vehicle 930 by controlling the vehicle 930. For example, the visual object 942 including an image and/or an icon representing an open lock may correspond to a function to open the at least one door of the vehicle 930 by controlling the vehicle 930. For example, the visual object 943 including an image and/or an icon representing a speaker may correspond to a function to sound a horn of the vehicle 930 by controlling the vehicle 930. For example, the visual object 944 may correspond to a function to open a trunk of the vehicle 930 by controlling the vehicle 930.

In the state 903 of FIG. 9C, the electronic device 101 may receive a wireless signal in the UWB from the vehicle 930 based on the operation described with reference to FIGS. 8, 9A, or 9B. Based on the wireless signal, the electronic device 101 may identify the vehicle 930 and/or a position of the vehicle 930. In the state 903 in which the vehicle 930 is identified, the electronic device 101 may transmit a wireless signal for executing a function assigned to a visual object corresponding to an input to the vehicle 930 through the NFC antenna, in response to the input indicating selection of any one of the visual objects 941, 942, 943, and 944. For example, based on an input indicating the selection of the visual object 942 corresponding to the function for opening a door of the vehicle 930, the electronic device 101 may execute a communication function with respect to the vehicle 930.

The electronic device 101 according to an embodiment may determine whether to change the position of the NFC antenna by controlling the actuator in a state in which the communication function with respect to the vehicle 930 is executed. For example, the electronic device 101 may determine whether to change the position of the NFC antenna based on the position of the vehicle 930 with respect to the electronic device 101 identified through the UWB antenna. The electronic device 101 may control the actuator so that the NFC antenna is disposed toward the vehicle 930. For example, the electronic device 101 may withdraw a portion of the flexible display 130 from the first housing 111, such as the state 904, so that the NFC antenna is disposed toward the vehicle 930.

Referring to FIG. 9C, in the state 904 in which the position of the NFC antenna is adjusted by controlling the actuator, the electronic device 101 may move the visual object 940 associated with the vehicle 930 from the active area of the flexible display 130 to the NFC antenna and a second area. Together with the visual object 940, the electronic device 101 may display a visual object 946 including text (e.g., "take it close to the door") for guiding action of the user with respect to the NFC antenna. The electronic device 101 may enable the user to move an edge 130-2 toward the vehicle 930 by using the visual object 940 and the visual object 946 including the text, moved to the edge 130-2 of the active area adjacent to the NFC antenna.

Although an operation of the electronic device 101 based on the UWB antennas 911, 912, and 913 has been described, an embodiment is not limited thereto. The electronic device 101 according to an embodiment may determine whether to change a position of the NFC antenna and/or whether to control the actuator based on the position of the external electronic device identified using an image sensor (e.g., the image sensor 363 of FIG. 3).

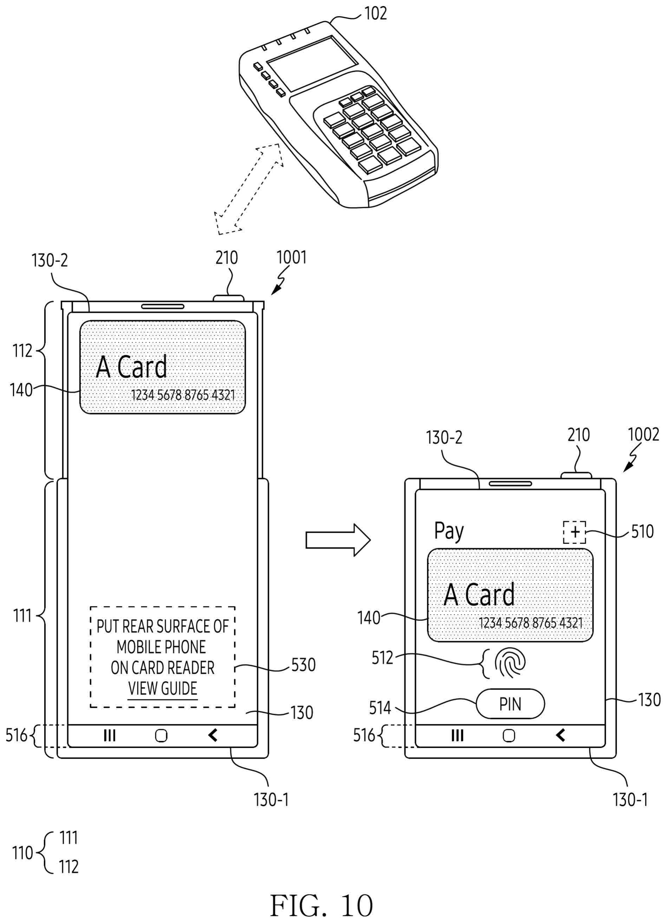

As described above, the electronic device 101 according to an embodiment may change the position of the NFC antenna based on extracting the portion of the flexible display 130 from the first housing 111. After executing a communication function based on the changed position, the electronic device 101 may control the actuator to restore the position of the NFC antenna. Hereinafter, an example of an operation of the electronic device 101 performed to restore the position of the NFC antenna will be described with reference to FIG. 10.

FIG. 10 illustrates different states 1001 and 1002 of an electronic device performing a communication function based on an NFC antenna. The electronic device 101 of FIGS. 1 to 3 and/or the processor 310 of the electronic device 101 of FIG. 3 may perform an operation described with reference to FIG. 10. The operation of the electronic device 101 described with reference to FIG. 10 may be associated with at least one of the operations of FIGS. 4, 6 and/or 8.

Referring to FIG. 10, the exemplary states 1001 and 1002 of an electronic device 101 communicating with an external electronic device 102 based on the NFC antenna (e.g., the NFC antenna 160 of FIG. 1, 2A to 2B) are illustrated. The state 1001 of FIG. 10 may correspond to the state 503 of FIG. 5A. In the state 1001 corresponding to a slide-out state, the electronic device 101 may display a visual object 140 in an area adjacent to an edge 130-2 of an active area of a flexible display 130. In the state 1001, the electronic device 101 may execute a communication function for payment based on the visual object 140. The communication function may be performed based on the NFC antenna (e.g., the NFC antenna 160 of FIGS. 1, 2A to 2B and/or the NFC antenna 354 of FIG. 3) of the electronic device 101.

In the state 1001 of FIG. 10, the external electronic device 102 may execute a function requested by the electronic device 101 based on information transmitted through the NFC antenna of the electronic device 101. For example, the external electronic device 102 may perform payment for a user corresponding to the electronic device 101 based on the information. Based on completing the payment, the external electronic device 102 may transmit information including a result of the payment to the electronic device 101. Based on receiving the information from the external electronic device 102, the electronic device 101 may identify the completion of the payment. As the payment is completed, the electronic device 101 may complete the communication function based on the NFC antenna.

The electronic device 101 according to an embodiment may identify completion of payment based on information transmitted from another external electronic device different from the external electronic device 102. For example, the external electronic device 102 receiving the information for the payment from the electronic device 101 may complete the payment by communicating with a server disposed in a network for the payment. The electronic device 101 may identify the completion of the payment based on receiving information indicating the completion of the payment from the server. The electronic device 101 receiving the information from the server may be performed based on other communication protocols different from NFC and/or MST, such as long term evolution (LTE), Wi-Fi, and/or 5G new radio (NR).

Referring to FIG. 10, based on completing execution of the communication function, the electronic device 101 may change a state of the electronic device 101 adjusted for the communication function to a state before executing the communication function. After switching from a slide-in state to the state 1001 corresponding to the slide-out state, the electronic device 101 may control an actuator to switch to the slide-in state based on the completion of the execution of the communication function. The state 1002 of FIG. 10 may include a state after the electronic device 101 controls the actuator based on the completion of the execution of the communication function. For example, the state 1002 of FIG. 10 may correspond to the slide-in state of the electronic device 101. A screen displayed by the electronic device 101 in the state 1002 corresponding to the slide-in state may correspond to the state 501 of FIG. 5A.

As described above, the electronic device 101 according to an embodiment may adjust the actuator to change a position of the NFC antenna according to an execution state of the communication function based on the NFC antenna. Since the electronic device 101 dynamically and/or actively changes the position of the NFC antenna, communication performance based on the NFC antenna may be improved.

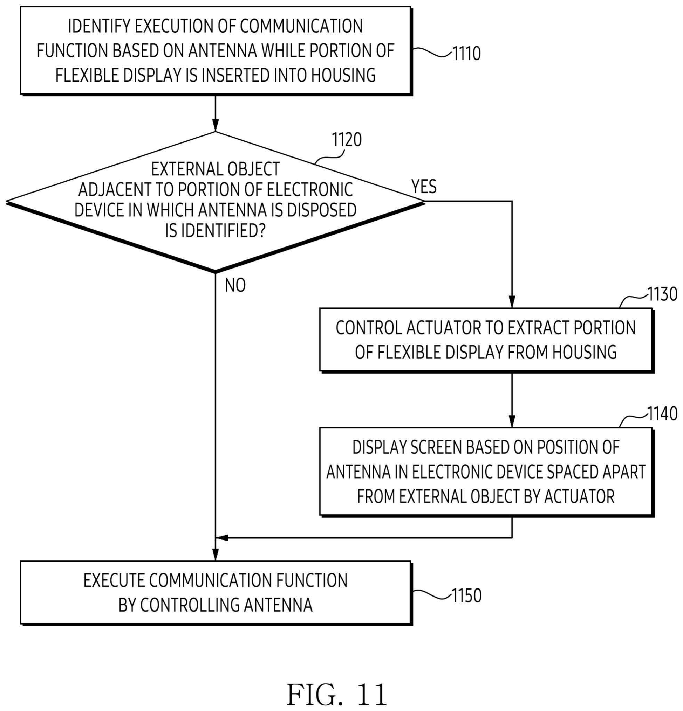

Hereinafter, an operation of the electronic device 101 described with reference to FIGS. 1 to 10 will be described with reference to FIG. 11.

FIG. 11 illustrates an example of a flowchart of an electronic device according to an embodiment. The electronic device 101 of FIGS. 1 to 3 and/or the processor 310 of the electronic device 101 of FIG. 3 may perform operations described with reference to FIG. 11. At least one of the operations of the electronic device described with reference to FIG. 11 may be associated with at least one of the operations of FIG. 4, 6, and/or 8.

Referring to FIG. 11, in operation 1110, a processor of the electronic device according to an embodiment may identify execution of a communication function based on an antenna while a portion of a flexible display is inserted into a housing. For example, the processor may identify execution of an application to transmit information (e.g., information for payment). The flexible display of the operation 1110 may include the flexible display 130 of FIGS. 1 to 3. The housing of the operation 1110 may include the housing 110 and/or the first housing 111 of FIG. 1. The antenna of the operation 1110 may include the NFC antenna 160 of FIGS. 1, 2A to 2B and/or the NFC antenna 354 of FIG. 3. The operation 1110 of FIG. 11 may include at least one of the operations 410 and 420 of FIG. 4, the operation 610 of FIG. 6, and/or the operations 810 and 820 of FIG. 8.

Referring to FIG. 11, in operation 1120, the processor of the electronic device according to an embodiment may identify an external object adjacent to a portion of the electronic device in which the antenna is disposed. The external object of the operation 1120 may include the hand 120 of FIGS. 1 and/or 7A to 7B, and the phone case 730 of FIG. 7C. The processor may identify the external object of the operation 1120 based on data of one or more sensors (e.g., the one or more sensors 360 of FIG. 3). The external object of the operation 1120 may include an external object having a high probability of blocking a wireless signal propagated from the antenna of the operation 1110. Based on identifying the external object of the operation 1120 (1120-YES), the processor may perform operation 1130. Before the external object of the operation 1120 is identified, or in a state in which the external object of the operation 1120 is not identified (1120-NO), the processor may perform operation 1150.

Referring to FIG. 11, in the operation 1130, the processor of the electronic device according to an embodiment may control an actuator to extract the portion of the flexible display from the housing. The actuator of the operation 1130 may include the actuator 1130 of FIG. 3. The operation 1130 of FIG. 11 may include at least one of the operation 440 of FIG. 4, the operation 650 of FIG. 6, and/or the operation 840 of FIG. 8. Based on the operation 1130, the processor may move the portion of the electronic device in which the antenna of the operation 1110 is disposed to a position spaced apart from the external object.

Referring to FIG. 11, in operation 1140, the processor of the electronic device according to an embodiment may display a screen based on the position of the antenna in the electronic device spaced apart from the external object by the actuator. The screen displayed based on the operation 1140 may include the screen displayed by the electronic device 101 of the state 503 of FIG. 5A, the state 904 of FIG. 9C, and the state 1001 of FIG. 10. On the screen, the processor may display a visual object (e.g., the visual object 140 of FIG. 1) associated with information to be transmitted based on the communication function at a position adjacent to the antenna of the operation 1110.

Referring to FIG. 11, in the operation 1150, the processor of the electronic device according to an embodiment may execute the communication function by controlling the antenna. The processor may execute the communication function based on the information of the operation 1110 by controlling the antenna. The operation 1150 of FIG. 11 may include at least one of the operation 450 of FIG. 4, the operation 660 of FIG. 6, and/or the operation 880 of FIG. 8. In the operation 1150, the processor may communicate with an external electronic device (e.g., the external electronic device 102 of FIG. 1) that is different from the electronic device. The processor may transmit a wireless signal of a frequency band (e.g., a frequency band for NFC) supported by the antenna of the operation 1110 by executing the communication function. In a case that execution of the communication function is completed based on the wireless signal, the processor may insert the portion of the flexible display extracted from the housing by the operation 1130 into the housing by controlling the actuator.

As described above, the electronic device according to an embodiment may control the actuator included in the electronic device in order to improve communication performance based on an NFC antenna. Based on controlling the actuator, the electronic device may change a position of the NFC antenna. Based on the changed position, the electronic device may improve the communication performance.

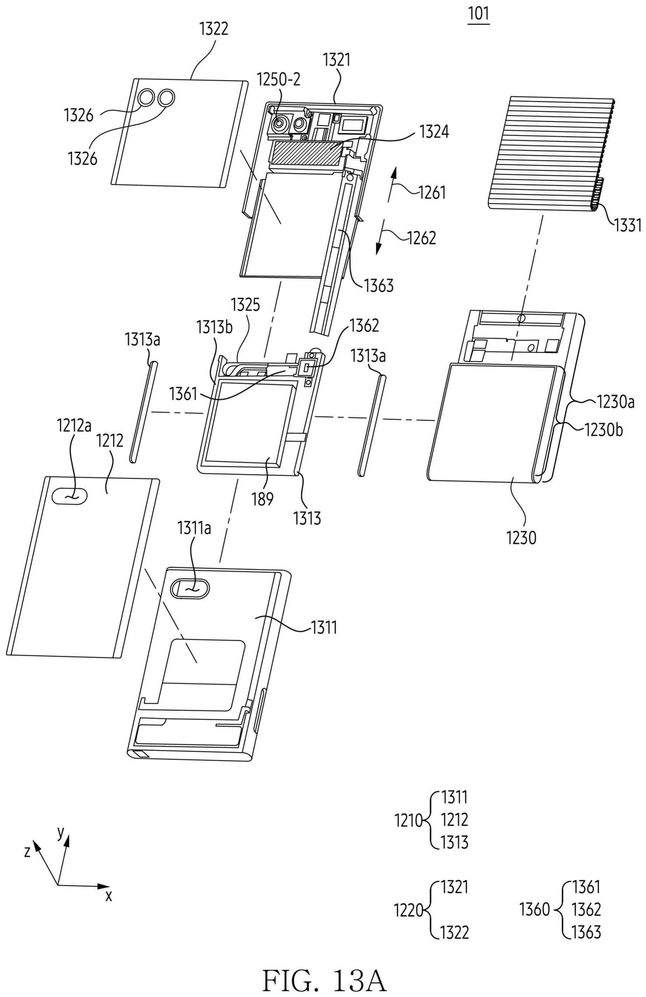

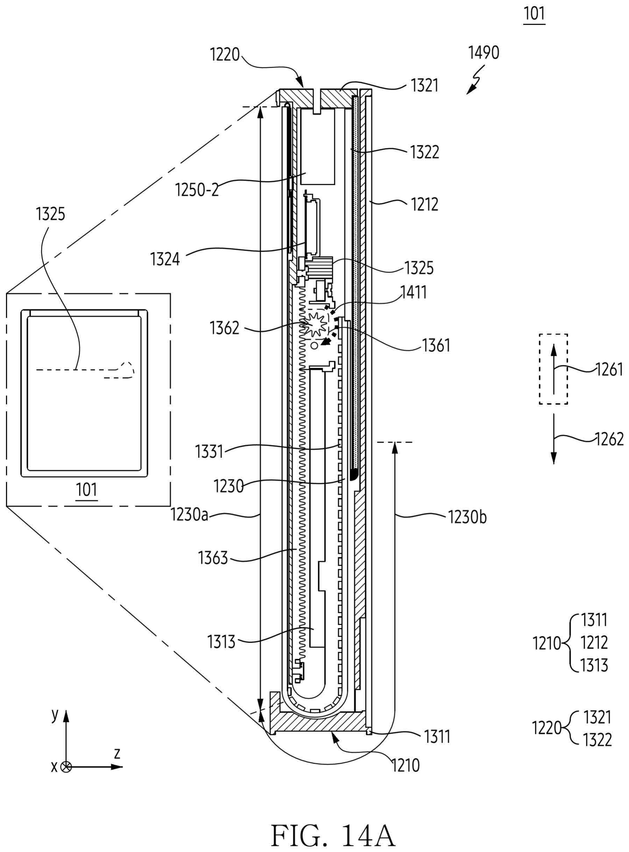

FIGS. 12A to 12D illustrate different states of an electronic device adjusting a shape of a flexible display. FIGS. 13A to 13B are exploded perspective views of an exemplary electronic device. FIGS. 14A to 14B are cross-sectional views of an electronic device in different states.

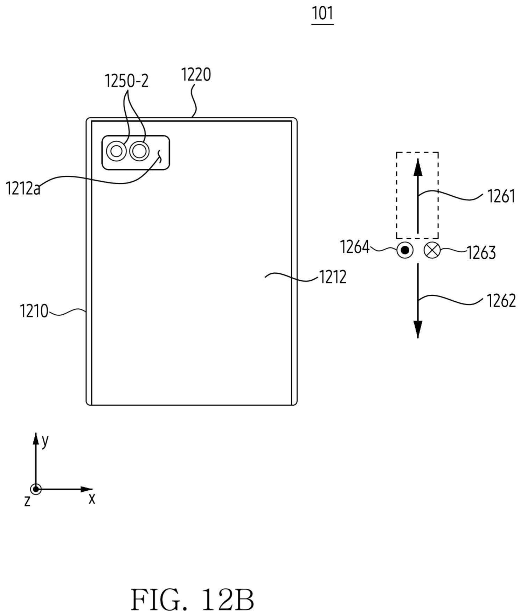

As described above, the flexible display 130 of FIGS. 1 to 10 may be flexible. For example, the flexible display 130 may include a display area exposed outside a housing of an electronic device 101 that provides at least a portion of an outer surface of the electronic device 101. For example, since the flexible display 130 has flexibility, at least a portion of the flexible display 130 may be rollable into the housing or slidable into the housing. For example, a size of the display area may be changed according to a size of the at least a portion of the flexible display 130 rolled into the housing or slid into the housing. The electronic device 101 including the flexible display 130 may be in a plurality of states, including a first state providing the display area having a first size and a second state providing the display area having a second size different from the first size. For example, the first state may be illustrated through a description of FIGS. 12A and 12B.

FIG. 12A is a top plan view of the electronic device 101 in the first state.

Referring to FIG. 12A, the electronic device 101 may include a first housing 1210, a second housing 1220 that is movable with respect to the first housing 1210 in a first direction 1261 parallel to a y-axis, or in a second direction 1262, parallel to the y-axis, opposite to the first direction 1261, and a display 1230 (e.g., the display).

For example, the electronic device 101 may be in the first state. For example, in the first state, the second housing 1220 may be movable with respect to the first housing 1210 in the first direction 1261 among the first direction 1261 and the second direction 1262. For example, in the first state, the second housing 1220 may not be movable in the second direction 1262 with respect to the first housing 1210.

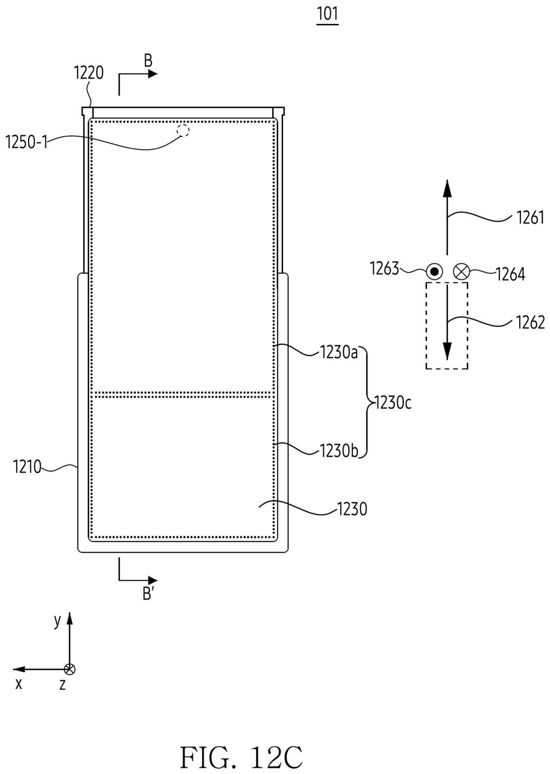

For example, in the first state, the display 1230 may provide the display area having the smallest size. For example, in the first state, the display area may correspond to an area 1230a. For example, although not illustrated in FIG. 12A, an area (e.g., an area 1230b of FIG. 12C) of the display 1230 different from the display area 1230a may be included in the first housing 1210. For example, in the first state, the area may be covered by the first housing 1210. For example, in the first state, the area may be rolled into the first housing 1210. For example, in the first state, the area 1230a may include a planar portion, unlike the area including a curved portion. However, it is not limited thereto. For example, in the first state, the area 1230a may include the curved portion that extends from the planar portion and is positioned in an edge portion.

For example, the first state may be referred to as a slide-in state or a closed state in terms of at least a portion of the second housing 1220 being positioned in the first housing 1210. For example, the first state may be referred to as a reduced state in terms of providing the display area having the smallest size. However, it is not limited thereto.

For example, the first housing 1210 may include a first image sensor 1250-1 in a camera module 1250 that is exposed through a portion of the area 1230a and faces in a third direction 1263 parallel to a z-axis. For example, although not illustrated in FIG. 12A, the second housing 1220 may include one or more second image sensors in the camera module 1250, exposed through a portion of the second housing 1220 and face in a fourth direction 1264 parallel to the z-axis and opposite to the third direction 1263. For example, the one or more second image sensors may be illustrated through the description of FIG. 12B.

FIG. 12B is a bottom view of the electronic device in the first state.

Referring to FIG. 12B, in the first state, one or more second image sensors 1250-2 disposed in the second housing 1220 may be positioned within a structure disposed in the first housing 1210 for the one or more second image sensors 1250-2. For example, in the first state, light from the outside of the electronic device 101 may be received by the one or more second image sensors 1250-2 through the structure. For example, since the one or more second image sensors 1250-2 are positioned within the structure in the first state, the one or more second image sensors 1250-2 may be exposed through the structure in the first state. For example, the structure may be implemented in various ways. For example, the structure may be an opening or a notch. For example, the structure may be an opening 1212a within a plate 1212 of the first housing 1210 surrounding at least a portion of the second housing 1220. However, it is not limited thereto. For example, in the first state, the one or more second image sensors 1250-2 included in the second housing 1220 may be covered by the plate 1212 of the first housing 1210.

For example, the first state (or the second state) may be changed to the second state (or the first state) through one or more intermediate states between the first state and the second state.

For example, the first state (or the second state) may be changed to the second state (or the first state) based on a predefined user input. For example, the first state (or the second state) may be changed to the second state (or the first state) in response to a user input to a physical button exposed through a portion of the first housing 1210 or a portion of the second housing 1220. For example, the first state (or the second state) may be changed to the second state (or the first state) in response to a touch input to an executable object displayed in the display area. For example, the first state (or the second state) may be changed to the second state (or the first state) in response to a touch input having a contact point on the display area and having a pressing strength of more than a reference strength. For example, the first state (or the second state) may be changed to the second state (or the first state) in response to a voice input received through a microphone of the electronic device 101. For example, the first state (or the second state) may be changed to the second state (or the first state) in response to an external force applied to the first housing 1210 and/or the second housing 1220 to move the second housing 1220 with respect to the first housing 1210. For example, the first state (or the second state) may be changed to the second state (or the first state) in response to a user input identified on an external electronic device (e.g., earbuds or a smart watch) connected to the electronic device 101. However, it is not limited thereto.

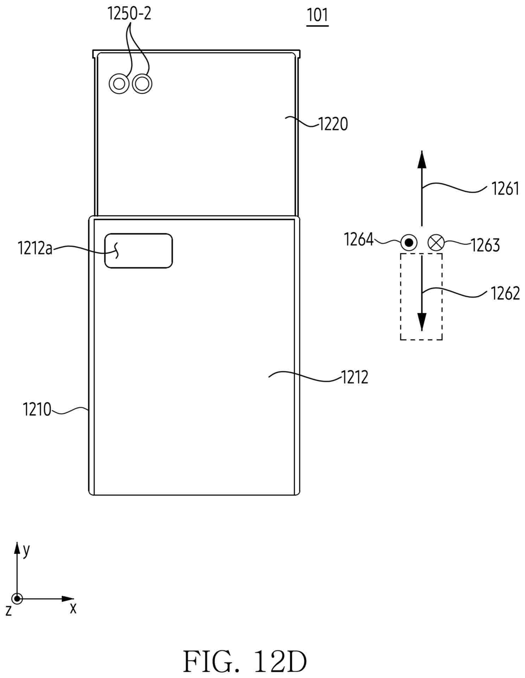

The second state may be illustrated through a description of FIGS. 12C and 12D.

FIG. 12C is a plan view of the electronic device in the second state.

Referring to FIG. 12C, the electronic device 101 may be in the second state. For example, in the second state, the second housing 1220 may be movable with respect to the first housing 1210 in the second direction 1262 among the first direction 1261 and the second direction 1262. For example, in the second state, the second housing 1220 may not be movable in the first direction 1261 with respect to the first housing 1210.

For example, in the second state, the display 1230 may provide the display area having the largest size. For example, in the second state, the display area may correspond to an area 1230c including the area 1230a and the area 1230b. For example, the area 1230b, which was included in the first housing 1210 in the first state may be exposed in the second state. For example, in the second state, the area 1230a may include a planar portion. However, it is not limited thereto. For example, the area 1230a may include a curved portion that extends from the planar portion and is positioned in an edge portion. For example, in the second state, the area 1230b may include a planar portion among the planar portion and a curved portion, unlike the area 1230a in the first state. However, it is not limited thereto. For example, the region 1230b may include a curved portion that extends from the planar portion of the area 1230b and is positioned in the edge portion.

For example, the second state may be referred to as a slide-out state or an open state in terms of at least a portion of the second housing 1220 being positioned outside the first housing 1210. For example, the second state may be referred to as an extended state in terms of providing the display area having the largest size. However, it is not limited thereto.

For example, when a state of the electronic device 101 is changed from the first state to the second state, the first image sensor 1250-1 facing the third direction 1263 may move together with the area 1230a according to movement of the second housing 1220 in the first direction 1261. For example, although not illustrated in FIG. 12C, when the state of electronic device 101 is changed from the first state to the second state, the one or more second image sensors 1250-2 facing the fourth direction 1264 may move according to the movement of the second housing 1220 in the first direction 1261. For example, a relative positional relationship between the one or more second image sensors 1250-2 and the structure illustrated through the description of FIG. 12B may be changed according to the movement of the one or more second image sensors 1250-2. For example, the change in the relative positional relationship may be illustrated through FIG. 12D.

FIG. 12D is a bottom view of the electronic device 101 in the second state.

Referring to FIG. 12D, in the second state, the one or more second image sensors 1250-2 may be positioned outside the structure. For example, in the second state, the one or more second image sensors 1250-2 may be positioned outside the opening 1212a within the plate 1212. For example, since the one or more second image sensors 1250-2 are positioned outside the opening 1212a in the second state, the one or more second image sensors 1250-2 may be exposed in the second state. For example, since the one or more second image sensors 1250-2 are positioned outside the structure in the second state, the relative positional relationship in the second state may be different from the relative positional relationship in the first state.

For example, in a case that the electronic device 101 does not include the structure, such as the opening 1212a, the one or more second image sensors 1250-2 in the second state may be exposed, unlike the one or more second image sensors 1250-2 in the first state.

Although not illustrated in FGS. 12A, 12B, 12C, and 12D, the electronic device 101 may be in an intermediate state between the first state and the second state. For example, a size of the display area in the intermediate state may be larger than a size of the display area in the first state and smaller than a size of the display area in the second state. For example, the display area in the intermediate state may correspond to an area including the area 1230a and a portion of the area 1230b. For example, in the intermediate state, the portion of the area 1230b may be exposed, and another portion (or a remaining portion) of the area 1230b may be covered by the first housing 1210 or rolled into the first housing 1210. However, it is not limited thereto.

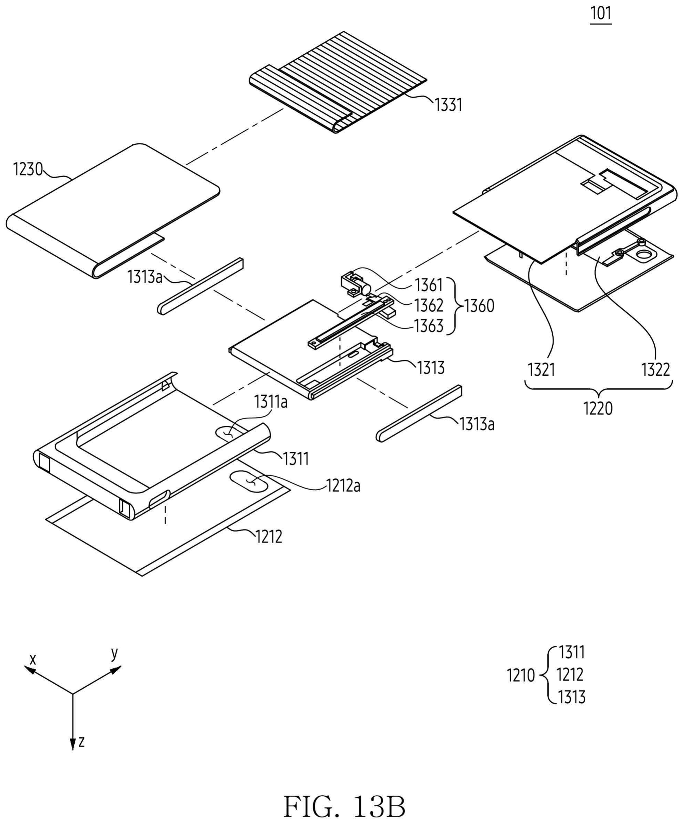

Referring back to FIG. 1, the electronic device 101 may include structures for moving a second housing (e.g., the second housing 1220 of FIGS. 12A to 12D) of the electronic device 101 with respect to a first housing (e.g., the first housing 1210 of FIGS. 12A to 12D) of the electronic device 101. For example, the structures may be illustrated through a description of FIGS. 13A and 13B.

FIGS. 13A to 13B are the exploded perspective views of the exemplary electronic device.

Referring to FIGS. 13A and 13B, the electronic device 101 may include the first housing 1210, the second housing 1220, the display 1230, and a driving unit 1360.

For example, the first housing 1210 may include a book cover 1311, the plate 1212, and a frame cover 1313.

For example, the book cover 1311 may at least partially form a side portion of an outer surface of the electronic device 101. For example, the book cover 1311 may at least partially form a rear portion of the outer surface. For example, the book cover 1311 may include an opening 1311a for the one or more second image sensors 1250-2. For example, the book cover 1311 may include a surface supporting the plate 1212. For example, the book cover 1311 may be coupled to the plate 1212. For example, the book cover 1311 may include the frame cover 1313. For example, the book cover 1311 may be coupled to the frame cover 1313.

For example, the plate 1212 may at least partially form the rear portion of the outer surface. For example, the plate 1212 may include the opening 1212a for the one or more second image sensors 1250-2. For example, the plate 1212 may be disposed on the surface of the book cover 1311. For example, the opening 1212a may be aligned with the opening 1311a.

For example, the frame cover 1313 may be at least partially surrounded by the book cover 1311.

For example, the frame cover 1313 may be at least partially surrounded by the display 1230. For example, the frame cover 1313 is at least partially surrounded by the display 1230, but a position of the frame cover 1313 may be maintained independently of movement of the display 1230. For example, the frame cover 1313 may be arranged in relation to at least a portion of components of the display 1230. For example, the frame cover 1313 may include rails 1313a that provide (or guide) a path for movement of at least one component of the display 1230.

For example, the frame cover 1313 may be coupled to at least one component of electronic device 101. For example, the frame cover 1313 may support a rechargeable battery 189. For example, the battery 189 may be supported through a recess or a hole in a surface 1313b of the frame cover 1313. For example, the frame cover 1313 may be coupled to an end of a flexible printed circuit board (FPCB) 1325 on the surface of the frame cover 1313. For example, although not explicitly illustrated in FIGS. 13A and 13B, another end of the FPCB 1325 may be connected to PCB 1324 through at least one connector. For example, the PCB 1324 may be electrically connected to another PCB (not illustrated in FIGS. 13A and 13B) that supplies power to a motor 1361 through the FPCB 1325.

For example, the frame cover 1313 may be coupled to at least one structure of the electronic device 101 for a plurality of states including the first state and the second state. For example, the frame cover 1313 may fasten the motor 1361 of the driving unit 1360.

For example, the second housing 1220 may include a front cover 1321 and a slide cover 1322.

For example, the front cover 1321 may be at least partially surrounded by the display 1230. For example, the front cover 1321 may be coupled to at least a portion of an area 1230a of the display 1230 that surrounds the front cover 1321, unlike the frame cover 1313, so that the display 1230 is moved according to the second housing 1220 moved with respect to the first housing 1210.

For example, the front cover 1321 may be coupled to at least one component of the electronic device 101. For example, the front cover 1321 may be coupled to the printed circuit board (PCB) 1324 including components of the electronic device 101. For example, the PCB 1324 may include a processor (not illustrated in FIGS. 13A and 13B). For example, the front cover 1321 may include the one or more second image sensors 1250-2.

For example, the front cover 1321 may be coupled to at least one structure of the electronic device 101 for the plurality of states including the first state and the second state. For example, the front cover 1321 may fasten a rack gear 1363 of the driving unit 1360.

For example, the front cover 1321 may be coupled to the slide cover 1322.

For example, the slide cover 1322 may be coupled to the front cover 1321 to protect at least one component of the electronic device 101 coupled in the front cover 1321 and/or at least one structure of the electronic device 101 coupled in the front cover 1321. For example, the slide cover 1322 may include a structure for the at least one component. For example, the slide cover 1322 may include one or more openings 1326 for the one or more second image sensors 1250-2. For example, the one or more openings 1326 may be aligned with the one or more second image sensors 1250-2 disposed on the front cover 1321. For example, a size of each of the one or more openings 1326 may correspond to a size of each of the one or more second image sensors 1250-2.

For example, the display 1230 may include a support member 1331. For example, the support member 1331 may include a plurality of bars. For example, the plurality of bars may be coupled to each other.

For example, the driving unit 1360 may include the motor 1361, a pinion gear 1362, and the rack gear 1363.

For example, the motor 1361 may operate based on power from the battery 189. For example, the power may be provided to the motor 1361 in response to the predefined user input.

For example, the pinion gear 1362 may be coupled to the motor 1361 through a shaft. For example, the pinion gear 1362 may be rotated based on the operation of the motor 1361 transmitted through the shaft.

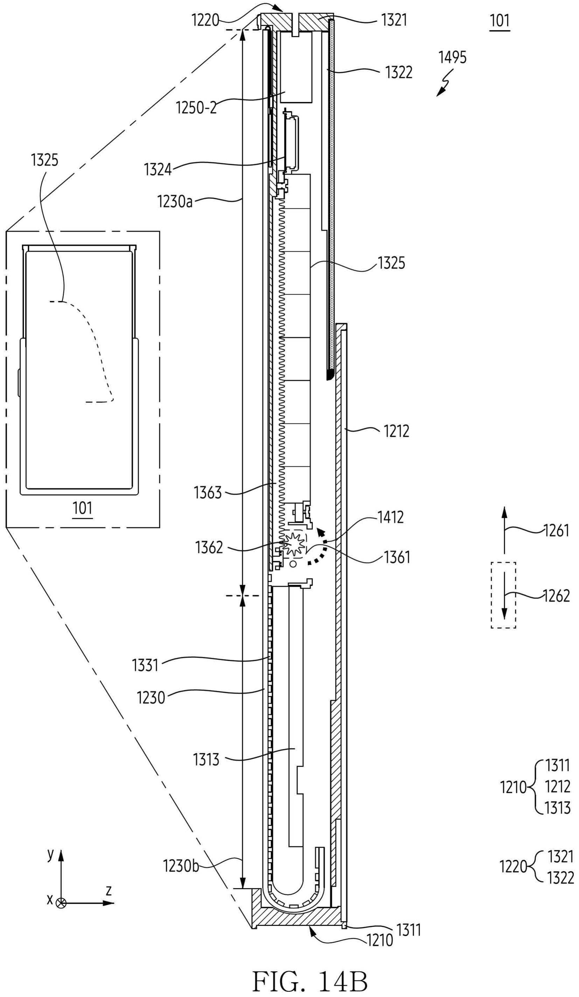

For example, the rack gear 1363 may be arranged in relation to the pinion gear 1362. For example, teeth of the rack gear 1363 may be engaged with teeth of the pinion gear 1362. For example, the rack gear 1363 may be moved in the first direction 1261 or in the second direction 1262 according to rotation of the pinion gear 1362. For example, the second housing 1220 may be moved in the first direction 1261 and the second direction 1262 by the rack gear 1363 moved according to the rotation of the pinion gear 1362 due to the operation of the motor 1361. For example, the first state of the electronic device 101 may be changed to another state (e.g., one or more intermediate states or the second state) different from the first state through the movement of the second housing 1220 in the first direction 1261. For example, the second state of the electronic device 101 may be changed to another state (e.g., the one or more intermediate states or the first state) different from the second state through the movement of the second housing 1220 in the second direction 1262. For example, the first state being changed to the second state by the driving unit 1360 and the second state being changed to the first state by the driving unit 1360 may be illustrated through FIGS. 14A and 14B.

An NFC antenna (e.g., the NFC antenna 160 of FIG. 1) of the electronic device 101 according to an embodiment may be disposed in the slide cover 1322 of the second housing 1220 of the electronic device 101. The NFC antenna disposed in the slide cover 1322 may be electrically connected to the PCB 1324. An embodiment is not limited thereto, and the NFC antenna may be disposed in a form of circuitry, a chip and/or a module in the PCB 1324. The embodiment is not limited thereto, and the NFC antenna of the electronic device 101 may be disposed in the front cover 1321 of the second housing 1220.

FIG. 14A is the cross-sectional view of the exemplary electronic device in the first state. FIG. 14B is the cross-sectional view of the exemplary electronic device in the second state.

Referring to FIGS. 14A and 14B, the motor 1361 may be operated based at least in part on the predefined user input received in a state 1490, which is the first state. For example, the pinion gear 1362 may be rotated in a first rotational direction 1411 based at least in part on the operation of the motor 1361. For example, the rack gear 1363 may be moved in the first direction 1261 based at least in part on the rotation of the pinion gear 1362 in the first rotational direction 1411. For example, since the front cover 1321 in the second housing 1320 fastens the rack gear 1363, the second housing 1320 may be moved in the first direction 1261 based at least in part on the movement of the rack gear 1363 in the first direction 1261. For example, since the front cover 1321 in the second housing 1320 is coupled to at least a portion of the area 1230a of the display 1230 and fastens the rack gear 1363, the display 1230 may be moved based at least in part on the movement of the rack gear 1363 in the first direction 1261. For example, the display 1230 may be moved along the rails 1313a. For example, a shape of at least a portion of the plurality of bars of the support member 1331 of the display 1230 may be changed when the state 1490 is changed to a state 1495, which is the second state.

For example, the area 1230b of the display 1230 may be moved according to the movement of the display 1230. For example, when the state 1490 is changed to the state 1495 according to the predefined user input, the area 1230b may be moved through a space between the book cover 1311 and the frame cover 1313. For example, the area 1230b in the state 1495 may be exposed, unlike the area 1230b rolled into the space in the state 1490.

For example, since the front cover 1321 in the second housing 1320 is coupled to the PCB 1324 connected to the other end of the FPCB 1325 and fastens the rack gear 1363, a shape of the FPCB 1325 may be changed when the state 1490 is changed to the state 1495.

The motor 1361 may be operated based at least in part on the predefined user input received in the state 1495. For example, the pinion gear 1362 may be rotated in a second rotational direction 1412 based at least in part on the operation of the motor 1361. For example, the rack gear 1363 may be moved in the second direction 1262 based at least in part on the rotation of the pinion gear 1362 in the second rotational direction 1412. For example, since the front cover 1321 in the second housing 1320 fastens the rack gear 1363, the second housing 1320 may be moved in the second direction 1262 based at least in part on the movement of the rack gear 1363 in the second direction 1262. For example, since the front cover 1321 in the second housing 1320 is coupled to the at least a portion of the area 1230a of the display 1230 and fastens the rack gear 1363, the display 1230 may be moved based at least in part on the movement of the rack gear 1363 in the second direction 1262. For example, the display 1230 may be moved along the rails 1313a. For example, a shape of at least a portion of the plurality of bars of the support member 1331 of the display 1230 may be changed when the state 1495 is changed to the state 1490.

For example, the area 1230b of the display 1230 may be moved according to the movement of the display 1230. For example, when the state 1495 is changed to the state 1490 according to the predefined user input, the area 1230b may be moved through the space between the book cover 1311 and the frame cover 1313. For example, the area 1230b in the state 1490 may be rolled into the space, unlike the area 1230b exposed in the state 1495.

For example, since the front cover 1321 in the second housing 1320 is coupled to the PCB 1324 connected to the other end of the FPCB 1325 and fastens the rack gear 1363, the shape of the FPCB 1325 may be changed when the state 1495 is changed to the state 1490.

FIGS. 12B to 14B illustrate the electronic devices 101 in which a height of the display area is changed and a width of the display area is maintained when the first state (or the second state) is changed to the second state (or the first state) in a portrait mode, but this is for convenience of explanation. For example, when the first state (or the second state) is changed to the second state (or the first state) in the portrait mode, the electronic device 101 may be implemented as maintaining the height of the display area and changing the width of the display area.

In an embodiment, a method for improving communication performance associated with NFC may be required. As described above, an electronic device (e.g., the electronic device 101 of FIGS. 1 to 10) according to an embodiment may comprise a first housing (e.g., the first housing 111 of FIGS. 1 to 10). The electronic device may comprise a second housing (e.g., the second housing 112 of FIGS. 1 to 10) slidably coupled to the first housing. The electronic device may comprise a flexible display (e.g., the flexible display 130 of FIGS. 1 to 10) inserted into the first housing or extracted from the first housing by movement of the second housing with respect to the first housing. The electronic device may comprise an antenna disposed adjacent to, among a first edge of the second housing facing the first housing or a second edge of the second housing opposed to the first edge, the second housing. The electronic device may comprise an actuator (e.g., the actuator 330 of FIG. 3) controlling the movement of the second housing with respect to the first housing. The electronic device may comprise one or more sensors (e.g., the one or more sensors 360 of FIG. 3). The electronic device may comprise a processor (e.g., the processor 310 of FIG. 3). The processor may be configured to identify, while a portion of the flexible display is inserted into the first housing, execution of an application to transmit information. The processor may be configured to control, based on identifying an external object adjacent to the second edge of the second housing where the antenna is disposed based on data of the one or more sensors, the actuator to extract the portion of the flexible display from the first housing. The processor may be configured to execute, by controlling the antenna separated from the external object by the second housing extracted from the first housing by the actuator, a communication function based on the information. The electronic device according to an embodiment may improve communication performance based on the antenna by increasing a distance between the external object and the antenna.

For example, the processor may be configured to display, in an area of an active area corresponding to the second edge adjacent to the antenna in the active area of the flexible display extended by the portion extracted from the first housing based on controlling of the actuator, a visual object (e.g., the visual object 140 of FIG. 1) associated with the communication function.

For example, the processor may be configured to display the visual object associated with the information wirelessly transmitted via the antenna based on execution of the communication function, in the area of the active area overlapped to the antenna in a direction of the active area.

For example, the processor may be configured to determine at least one of whether to control the actuator, whether to display the visual object, or whether to execute the communication function, based on authentication information identified through the one or more sensors.

For example, the processor may be configured to, while the active area is extended by the actuator, move the visual object displayed in another area different from the area, to the area.

For example, the antenna may be a first antenna for near field communication (NFC). The processor may be configured to initiate controlling the actuator based on identifying the external object positioned between an external electronic device corresponding to the first antenna and the first antenna based on the data.

For example, the electronic device may comprise a second antenna for magnetic secure transmission (MST). The processor may be configured to, while the portion of the flexible display is inserted into the first housing, transmit the information using the second antenna independently from controlling the actuator.

For example, the electronic device may comprise a third antenna associated with ultra-wideband (UWB). The processor may be configured to, based on identifying a first direction of the external electronic device with respect to the electronic device based on a signal in the UWB that is received through the third antenna, control the actuator using the first direction and a second direction of the second edge associated with the first antenna.

As described above, a method of an electronic device according to an embodiment may comprise identifying (e.g., the operation 1110 of FIG. 11), while a portion of a flexible display of the electronic device is inserted into a first housing of the electronic device, execution of an application to transmit information. The antenna may be disposed adjacent to a second edge among a first edge of a second housing of the electronic device facing the first housing or the second edge of the second housing opposite the first edge. The method may comprise controlling (e.g., the operation 1130 of FIG. 11), based on identifying an external object adjacent to the second edge of the second housing where the antenna is disposed based on data of one or more sensors of the electronic device, the actuator to extract the portion of the flexible display from the first housing. The method may comprise executing (e.g., the operation 1150 of FIG. 11), by controlling the antenna of the electronic device separated from the external object by the second housing extracted from the first housing by the actuator, a communication function based on the information.

For example, the executing may comprise displaying, in an area of an active area corresponding to the second edge adjacent to the antenna in the active area of the flexible display extended by the portion extracted from the first housing based on controlling of the actuator, a visual object associated with the communication function.

For example, the displaying may comprise displaying the visual object associated with the information wirelessly transmitted via the antenna based on execution of the communication function, in the area of the active area overlapped to the antenna in a direction of the active area.

For example, it may comprise determining at least one of whether to control the actuator, whether to display the visual object, or whether to execute the communication function, based on authentication information identified through the one or more sensors.

For example, the displaying may comprise, while the active area is extended by the actuator, moving the visual object displayed in another area different from the area, to the area.

For example, the antenna may be a first antenna for near field communication (NFC). The controlling may comprise initiating controlling the actuator based on identifying the external object positioned between an external electronic device corresponding to the first antenna and the first antenna based on the data.

For example, the method may comprise, while the portion of the flexible display is inserted into the first housing, transmitting the information using a second antenna of the electronic device for magnetic secure transmission (MST) independently from controlling the actuator.

For example, the controlling may comprise controlling, based on identifying a first direction of the external electronic device with respect to the electronic device based on a signal in UWB that is received through a third antenna of the electronic device associated with the ultra-wideband (UWB), the actuator using the first direction and a second direction of the second edge associated with the first antenna.

As described above, an electronic device according to an embodiment may comprise a first housing. The electronic device may comprise a second housing slidably coupled to the first housing. The electronic device may comprise a flexible display inserted into the first housing or extracted from the first housing by movement of the second housing with respect to the first housing. The electronic device may comprise an antenna disposed adjacent to, among a first edge of the second housing facing the first housing or a second edge of the second housing opposed to the first edge, the second housing. The electronic device may comprise an actuator controlling the movement of the second housing with respect to the first housing. The electronic device may comprise a processor. The processor may be configured to display, based on a function associated with payment, a visual object in a first area of an active area of the flexible display. The processor may be configured to control, based on executing the function, the actuator to extract a portion of the flexible display inserted into the first housing from the first housing. The processor may be configured to move, in the active area extended by the second housing extracted from the first housing by the actuator, the visual object displayed in the first area to a second area of the active area which is overlapped to the antenna and adjacent to the second edge. The processor may be configured to control, in response to completing the execution of the function based on the antenna, the actuator to insert the portion of the flexible display extracted from the first housing into the first housing.

For example, the electronic device may further comprise one or more sensors. The processor may be configured to initiate controlling the actuator based on identifying an external object adjacent to the antenna using the one or more sensors.

As described above, a method of an electronic device according to an embodiment may comprise displaying, based on executing a function associated with payment, a visual object in a first area of an active area of a flexible display of the electronic device. The flexible display may be inserted into a first housing or extracted from the first housing by movement of a second housing of the electronic device with respect to the first housing of the electronic device. The method may comprise controlling, based on executing the function, an actuator of the electronic device to extract a portion of the flexible display inserted into the first housing from the first housing. The method may comprise moving, in the active area extended by the second housing extracted from the first housing by the actuator, the visual object displayed in the first area to a second area of the active area which is overlapped to the antenna disposed adjacent to an edge of the second housing. The method may comprise controlling, in response to completing the execution of the function based on the antenna, the actuator to insert the portion of the flexible display extracted from the first housing into the first housing.

For example, the method may comprise initiating controlling the actuator for the extraction of the portion of the flexible display based on identifying an external object adjacent to the antenna using one or more sensors of the electronic device.

As described above, an electronic device according to an embodiment may comprise a first housing. The electronic device may comprise a second housing slidably coupled to the first housing. The electronic device may comprise a flexible display inserted into the first housing or extracted from the first housing by movement of the second housing with respect to the first housing. The electronic device may comprise an antenna disposed adjacent to, among a first edge of the second housing facing the first housing or a second edge of the second housing opposed to the first edge, the second housing. The electronic device may comprise an actuator controlling the movement of the second housing with respect to the first housing. The electronic device may comprise one or more sensors. The electronic device may comprise a processor. The processor may be configured to display, while a portion of the flexible display is inserted into the first housing, a visual object in a first area of an active area of the flexible display. The processor may be configured to control, based on identifying an external object between an external electronic device corresponding to the visual object and the second edge based on data of the one or more sensors, the actuator to extract the portion of the flexible display from the first housing. The processor may be configured to move, in the active area extended by the second housing extracted from the first housing by the actuator, the visual object displayed in the first area to a second area of the active area, which is overlapped to the antenna and adjacent to the second edge.

For example, the processor may be configured to transmit a wireless signal to the external electronic device while displaying the visual object in the active area by controlling the antenna.

For example, the antenna may be a first antenna for near field communication (NFC). The electronic device may comprise a second antenna for magnetic secure transmission (MST). The electronic device may comprise a third antenna associated with ultra-wideband (UWB).

For example, the processor may be configured to control, based on identifying the external electronic device using the second antenna while the portion of the flexible display is inserted into the first housing, the second antenna independently from controlling the actuator.

The processor may be configured to, based on identifying a first direction of the external electronic device with respect to the electronic device based on a signal in the UWB that is received through the third antenna, control the actuator using the first direction and a second direction of the second edge associated with the first antenna.

As described above, a method of an electronic device according to an embodiment may comprise, displaying, while a portion of a flexible display of the electronic device is inserted into a first housing of the electronic device, a visual object in a first area of an active area of the flexible display. The flexible display may be inserted into the first housing or extracted from the first housing by movement of a second housing of the electronic device with respect to the first housing. The method may comprise controlling, based on identifying an external object between an external electronic device corresponding to the visual object and the second housing based on data of one or more sensors of the electronic device, an actuator of the electronic device to extract the portion of the flexible display from the first housing. The method may comprise moving, in the active area extended by the second housing extracted from the first housing by the actuator, the visual object displayed in the first area to a second area of the active area, which is overlapped to the antenna included in the second housing.

For example, the method may comprise transmitting a wireless signal to the external electronic device while displaying the visual object in the active area by controlling the antenna.

For example, the antenna may be a first antenna for near field communication (NFC). The method may comprise controlling, based on identifying the external electronic device using a second antenna of the electronic device for magnetic secure transmission (MST) while the portion of the flexible display is inserted into the first housing, the second antenna independently from controlling the actuator.

For example, the controlling may comprise controlling, based on identifying a first direction of the external electronic device with respect to the electronic device based on a signal in UWB that is received through a third antenna of the electronic device associated with the ultra-wideband (UWB), the actuator using the first direction and a second direction of the second edge associated with the first antenna.

As described above, an electronic device according to an embodiment may comprise a first housing, a second housing slidably coupled to the first housing, a flexible display inserted into the first housing or extracted from the first housing by movement of the second housing with respect to the first housing, an actuator controlling the movement of the second housing with respect to the first housing, one or more sensors, and a processor. The processor may be configured to display, while a portion of the flexible display is inserted into the first housing, a first screen including a list of functions to be executed for payment of a user. The processor may be configured to control, based on identifying an input indicating execution of a plurality of functions through the list, the actuator to extract the portion of the flexible display from the first housing. The processor may be configured to display, in different portions of an active area of the flexible display extended by the extracted portion, visual objects associated with the execution of the plurality of functions corresponding to the input.

As described above, a method of an electronic device according to an embodiment may comprise displaying, while a portion of a flexible display of the electronic device is inserted into a first housing of the electronic device, a first screen including a list of functions to be executed for payment of a user. The method may comprise controlling, based on identifying an input indicating execution of a plurality of functions through the list, an actuator of the electronic device to extract the portion of the flexible display from the first housing. The method may comprise displaying, in different portions of an active area of the flexible display extended by the extracted portion, visual objects associated with the execution of the plurality of functions corresponding to the input.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

Although the embodiments have been described above with reference to limited examples and drawings, various modifications and variations may be made from the above description by those skilled in the art. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

**Claims**

1. An electronic device, comprising:

   a first housing;
   a second housing slidably coupled to the first housing;
   a flexible display inserted into the first housing or extracted from the first housing by movement of the second housing with respect to the first housing;
   an antenna disposed adjacent to, among a first edge of the second housing facing the first housing or a second edge of the second housing opposed to the first edge, the second housing;
   an actuator controlling the movement of the second housing with respect to the first housing;
   one or more sensors;
   at least one processor including processing circuitry; and
   memory including one or more storage media storing instructions, wherein the instructions, when executed by the at least one processor individually and/or collectively, cause the electronic device to:

      identify, while a portion of the flexible display is inserted into the first housing, execution of an application to transmit information;
      control, based on identifying an external object adjacent to the second edge of the second housing where the antenna is disposed based on data of the one or more sensors, the actuator to extract the portion of the flexible display from the first housing; and

execute, by controlling the antenna separated from the external object by the second housing extracted from the first housing by the actuator, a communication function based on the information.

2. The electronic device of claim 1, wherein the instructions, when executed by the at least one processor individually and/or collectively, cause the electronic device to:
display, in an area of an active area corresponding to the second edge adjacent to the antenna in the active area of the flexible display extended by the portion extracted from the first housing based on controlling of the actuator, a visual object associated with the communication function.

3. The electronic device of claim 2, wherein the instructions, when executed by the at least one processor individually and/or collectively, cause the electronic device to:
display the visual object associated with the information wirelessly transmitted via the antenna based on execution of the communication function, in the area of the active area overlapped to the antenna in a direction of the active area.

4. The electronic device of claim 2, wherein the instructions, when executed by the at least one processor individually and/or collectively, cause the electronic device to:
determine whether to control the actuator based on authentication information identified through the one or more sensors.

5. The electronic device of claim 2, wherein the instructions, when executed by the at least one processor individually and/or collectively, cause the electronic device to:
while the active area is extended by the actuator, move the visual object displayed in another area different from the area, to the area.

6. The electronic device of claim 1, wherein the antenna is a first antenna for near field communication, and,
wherein the instructions, when executed by the at least one processor individually and/or collectively, cause the electronic device to:
initiate controlling the actuator based on identifying the external object positioned between an external electronic device corresponding to the first antenna and the first antenna based on the data.

7. The electronic device of claim 6, further comprising a second antenna for magnetic secure transmission,
wherein the instructions, when executed by the at least one processor individually and/or collectively, cause the electronic device to:
while the portion of the flexible display is inserted into the first housing, transmit the information using the second antenna independently from controlling the actuator.

8. The electronic device of claim 6, further comprising a third antenna associated with ultra-wideband,
wherein the instructions, when executed by the at least one processor individually and/or collectively, cause the electronic device to:
based on identifying a first direction of the external electronic device with respect to the electronic device based on a signal in the UWB that is received through the third antenna, control the actuator using the first direction and a second direction of the second edge associated with the first antenna.

9. A method of an electronic device, comprising:

identifying, while a portion of a flexible display of the electronic device is inserted into a first housing, execution of an application to transmit information, wherein the antenna is disposed, among a first edge of a second housing of the electronic device facing the first housing or a second edge of the second housing opposite to the first edge, adjacent to the second edge;
controlling, based on identifying an external object adjacent to the second edge of the second housing where the antenna is disposed based on data of one or more sensors of the electronic device, the actuator to extract the portion of the flexible display from the first housing; and
executing, by controlling an antenna of the electronic device separated from the external object by the second housing extracted from the first housing by the actuator, a communication function based on the information.

10. The method of claim 9, wherein the executing comprises:

displaying, in an area of an active area corresponding to the second edge adjacent to the antenna in the active area of the flexible display extended by the portion extracted from the first housing based on controlling of the actuator, a visual object associated with the communication function.

11. The method of claim 10, wherein the displaying comprises:
displaying the visual object associated with the information wirelessly transmitted via the antenna based on execution of the communication function, in the area of the active area overlapped to the antenna in a direction of the active area.

12. The method of claim 10, further comprising:
determining whether to control the actuator based on authentication information identified through the one or more sensors.

13. The method of claim 10, wherein the displaying comprises:
while the active area is extended by the actuator, moving the visual object displayed in another area different from the area, to the area.

14. The method of claim 9, wherein the antenna is a first antenna for near field communication,
wherein the controlling comprises:
initiating controlling the actuator based on identifying the external object positioned between an external electronic device corresponding to the first antenna and the first antenna based on the data.

15. The method of claim 14, comprising:
while the portion of the flexible display is inserted into the first housing, transmitting the information using a second antenna of the electronic device for magnetic secure transmission independently from controlling the actuator.

FIG. 1

FIG. 2A

FIG. 2B

FIG. 3

```
┌─────────────────────────────────────────────┐
│  IDENTIFY EVENT FOR EXECUTING COMMUNICATION   │
│  FUNCTION BASED ON NFC ANTENNA IN STATE       │ ╮ 410
│  IN WHICH PORTION OF FLEXIBLE DISPLAY IS      │
│  INSERTED INTO HOUSING OF ELECTRONIC DEVICE   │
└─────────────────────────────────────────────┘
                     │
                     ▼
┌─────────────────────────────────────────────┐
│    OBTAIN AUTHENTICATION INFORMATION FOR      │ ╮ 420
│    EXECUTING COMMUNICATION FUNCTION           │
└─────────────────────────────────────────────┘
                     │
                     ▼
              430
          ╱───────────────╲
         ╱  EXTERNAL OBJECT  ╲         NO
        ⟨ ADJACENT TO NFC ANTENNA AND/OR ⟩──────┐
         ╲ ELECTRONIC DEVICE IS ╱               │
          ╲   IDENTIFIED?   ╱                    │
           ╲───────────────╱                     │
                  │ YES                          │
                  ▼                              │
┌─────────────────────────────────────────────┐ │
│ EXTRACT PORTION OF FLEXIBLE DISPLAY FROM HOUSING │ ╮ 440
│ OF ELECTRONIC DEVICE BY CONTROLLING ACTUATOR │ │
└─────────────────────────────────────────────┘ │
                  │◄─────────────────────────────┘
                  ▼
┌─────────────────────────────────────────────┐
│  TRANSMIT WIRELESS SIGNAL BASED ON EXECUTION  │
│  OF COMMUNICATION FUNCTION BY                  │ ╮ 450
│  CONTROLLING NFC ANTENNA                       │
└─────────────────────────────────────────────┘
```

FIG. 4

FIG. 5A

FIG. 5B

FIG. 5C

IDENTIFY EVENT FOR EXECUTING COMMUNICATION FUNCTION BASED ON NFC ANTENNA — 610

EXTERNAL OBJECT (E.G., HAND) ADJACENT TO NFC ANTENNA USING DATA FROM GRIP SENSOR IS IDENTIFIED? — 620

YES

NO

EXTERNAL OBJECT (E.G., CASE) COVERING NFC ANTENNA BASED ON DATA OF HALL SENSOR IS IDENTIFIED? — 630

YES

NO

INTENSITY OF WIRELESS SIGNAL RECEIVED THROUGH NFC ANTENNA IS LESS THAN PRESET INTENSITY? — 640

YES

NO

EXECUTE COMMUNICATION FUNCTION BASED ON NFC ANTENNA, INDEPENDENTLY OF CONTROLLING ACTUATOR — 660

EXTRACT PORTION OF FLEXIBLE DISPLAY INSERTED INTO HOUSING BY CONTROLLING ACTUATOR — 650

FIG. 6

FIG. 7A

FIG. 7B

FIG. 7C

IDENTIFY EVENT FOR EXECUTING COMMUNICATION FUNCTION BASED ON NFC ANTENNA IN STATE IN WHICH PORTION OF FLEXIBLE DISPLAY IS INSERTED INTO HOUSING OF ELECTRONIC DEVICE ⌒ 810

IDENTIFY POSITION OF EXTERNAL ELECTRONIC DEVICE CORRESPONDING TO NFC ANTENNA, BY CONTROLLING UWB ANTENNA AND/OR CAMERA ⌒ 820

830

EXTERNAL OBJECT ADJACENT TO NFC ANTENNA AND/OR ELECTRONIC DEVICE IS IDENTIFIED?

NO

YES

EXTRACT PORTION OF FLEXIBLE DISPLAY FROM HOUSING OF ELECTRONIC DEVICE BY CONTROLLING ACTUATOR ⌒ 840

DISPLAY SCREEN ASSOCIATED WITH COMMUNICATION FUNCTION BASED ON POSITION OF EXTERNAL ELECTRONIC DEVICE ⌒ 850

FIG. 8

FIG. 9A

FIG. 9B

FIG. 9C

PUT REAR SURFACE OF
MOBILE PHONE
ON CARD READER
VIEW GUIDE

Pay

A Card
1234 5678 8765 4321

PIN

FIG. 10

IDENTIFY EXECUTION OF COMMUNICATION
FUNCTION BASED ON ANTENNA WHILE PORTION OF
FLEXIBLE DISPLAY IS INSERTED INTO HOUSING — 1110

1120

EXTERNAL OBJECT
ADJACENT TO PORTION OF ELECTRONIC
DEVICE IN WHICH ANTENNA IS DISPOSED
IS IDENTIFIED?

YES

NO

CONTROL ACTUATOR TO EXTRACT PORTION
OF FLEXIBLE DISPLAY FROM HOUSING — 1130

DISPLAY SCREEN BASED ON POSITION OF
ANTENNA IN ELECTRONIC DEVICE SPACED APART
FROM EXTERNAL OBJECT BY ACTUATOR — 1140

EXECUTE COMMUNICATION FUNCTION
BY CONTROLLING ANTENNA — 1150

FIG. 11

FIG. 12A

FIG. 12B

101

FIG. 12C

FIG. 12D

FIG. 13A

FIG. 13B

FIG. 14A

FIG. 14B

## INTERNATIONAL SEARCH REPORT

| International application No. |
|---|
| **PCT/KR2024/002192** |

**A. CLASSIFICATION OF SUBJECT MATTER**

**H04M 1/02**(2006.01)i; **H01Q 1/24**(2006.01)i; **G06F 1/16**(2006.01)i

According to International Patent Classification (IPC) or to both national classification and IPC

**B. FIELDS SEARCHED**

Minimum documentation searched (classification system followed by classification symbols)

H04M 1/02(2006.01); G06F 1/16(2006.01); G06F 1/32(2006.01); G06F 3/03(2006.01); H01Q 1/24(2006.01); H01Q 1/38(2006.01); H04B 7/0413(2017.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 하우징(housing), 인출(extraction), 플렉서블 디스플레이(flexible display), 액추에이터(actuator), 센서(sensor), 외부 객체(external object), 안테나(antenna)

**C. DOCUMENTS CONSIDERED TO BE RELEVANT**

| Category* | Citation of document, with indication, where appropriate, of the relevant passages | Relevant to claim No. |
|---|---|---|
| A | WO 2021-177482 A1 (LG ELECTRONICS INC.) 10 September 2021 (2021-09-10)<br>See paragraphs [0036]-[0254]; claim 1; and figures 2-5. | 1-15 |
| A | KR 10-2022-0061806 A (SAMSUNG ELECTRONICS CO., LTD.) 13 May 2022 (2022-05-13)<br>See paragraphs [0043]-[0131]; and figures 2a-7. | 1-15 |
| A | WO 2021-215557 A1 (LG ELECTRONICS INC.) 28 October 2021 (2021-10-28)<br>See paragraphs [0012]-[0045]. | 1-15 |
| A | US 2022-0147116 A1 (SAMSUNG ELECTRONICS CO., LTD.) 12 May 2022 (2022-05-12)<br>See paragraphs [0005]-[0011]; claim 1; and figures 2-7. | 1-15 |
| A | KR 10-2022-0012705 A (SAMSUNG ELECTRONICS CO., LTD.) 04 February 2022 (2022-02-04)<br>See claim 1. | 1-15 |

☐ Further documents are listed in the continuation of Box C.     ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 June 2024** | **04 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| PCT/KR2024/002192 |

| Patent document cited in search report | | | Publication date (day/month/year) | Patent family member(s) | | | Publication date (day/month/year) |
| --- | --- | --- | --- | --- | --- | --- | --- |
| WO | 2021-177482 | A1 | 10 September 2021 | EP | 3876073 | A1 | 08 September 2021 |
| | | | | EP | 3876073 | B1 | 10 April 2024 |
| | | | | US | 11226655 | B2 | 18 January 2022 |
| | | | | US | 2021-0278878 | A1 | 09 September 2021 |
| KR | 10-2022-0061806 | A | 13 May 2022 | US | 11968630 | B2 | 23 April 2024 |
| | | | | US | 2022-0150847 | A1 | 12 May 2022 |
| | | | | WO | 2022-097975 | A1 | 12 May 2022 |
| WO | 2021-215557 | A1 | 28 October 2021 | US | 11387575 | B2 | 12 July 2022 |
| | | | | US | 2021-0336356 | A1 | 28 October 2021 |
| US | 2022-0147116 | A1 | 12 May 2022 | EP | 4191372 | A1 | 07 June 2023 |
| | | | | EP | 4191372 | A4 | 10 January 2024 |
| | | | | KR | 10-2022-0061813 | A | 13 May 2022 |
| | | | | US | 11687128 | B2 | 27 June 2023 |
| | | | | WO | 2022-098165 | A1 | 12 May 2022 |
| KR | 10-2022-0012705 | A | 04 February 2022 | EP | 4138218 | A1 | 22 February 2023 |
| | | | | EP | 4138218 | A4 | 17 January 2024 |
| | | | | US | 11736598 | B2 | 22 August 2023 |
| | | | | US | 2022-0345557 | A1 | 27 October 2022 |
| | | | | WO | 2022-019508 | A1 | 27 January 2022 |

Form PCT/ISA/210 (patent family annex) (July 2022)